(19)

Europäisches
Patentamt
European
Patent Office
Office européen
des brevets

(11) **EP 1 881 450 A1**

(12) **EUROPEAN PATENT APPLICATION**
published in accordance with Art. 153(4) EPC

(43) Date of publication:
**23.01.2008 Bulletin 2008/04**

(21) Application number: **06746229.1**

(22) Date of filing: **10.05.2006**

(51) Int Cl.:
*G06T 1/00* (2006.01)          *G01B 11/00* (2006.01)
*G01C 3/06* (2006.01)          *G06T 7/20* (2006.01)
*G08G 1/16* (2006.01)          *H04N 7/18* (2006.01)

(86) International application number:
**PCT/JP2006/309419**

(87) International publication number:
**WO 2006/121087 (16.11.2006 Gazette 2006/46)**

(84) Designated Contracting States:
**DE FR GB**

(30) Priority: **10.05.2005 JP 2005137850**
**18.05.2005 JP 2005145825**
**18.05.2005 JP 2005145826**

(71) Applicant: **Olympus Corporation**
**Tokyo 151-0072 (JP)**

(72) Inventors:
• **IWAKI, Hidekazu**
**Shibuya-ku**
**Tokyo 151-0072 (JP)**

• **KOSAKA, Akio**
**Shibuya-ku**
**Tokyo 151-0072 (JP)**
• **MIYOSHI, Takashi**
**Shibuya-ku**
**Tokyo 151-0072 (JP)**

(74) Representative: **von Hellfeld, Axel**
**Wuesthoff & Wuesthoff**
**Patent- und Rechtsanwälte**
**Schweigerstrasse 2**
**81541 München (DE)**

(54) **IMAGE PROCESSING APPARATUS, IMAGE PROCESSING METHOD, AND IMAGE PROCESSING PROGRAM**

(57)     When a picked image is processed to calculate a distance to a predetermined object such as a preceding vehicle or the like, a load of a calculation process can be reduced, distance information can be output at a high speed, and various pieces of information included in the image to be picked are multilaterally processed. For this purpose, provided are an imaging unit which is mounted on a mobile object and picks an image of a predetermined field of view to generate an image; a moving information detection unit which detects moving information including a speed of the mobile object; a processing content setting unit which sets contents of a process to be performed in the image generated by the imaging unit in accordance with the moving information detected by the moving information detection means; and a processing calculation unit which performs processing calculation corresponding to the contents of the process set by the processing content setting unit.

FIG.1

**Description**

TECHNICAL FIELD

The present invention relates to an image processing apparatus, an image processing method, and an image processing program which pick an image of a predetermined field of view and perform image processing to a generated image.

BACKGROUND ART

A conventional inter-car distance detection apparatus which is mounted on a given vehicle such as an automobile, processes an image obtained by picking a preceding vehicle running in front of the given vehicle, and detects a distance from the given vehicle to the preceding vehicle are known (For example, see Patent Document 1). In order to capture the inter-vehicle distance detection apparatus captures the preceding vehicle on an image, a plurality of distance measurement windows are set at predetermined positions in an image, an image is processed in each of the set distance measurement windows to calculate a distance to an arbitrary object, and recognizes an image pickup position of the preceding vehicle on the basis of the calculation result and position information of the measurement windows.

A technique which, in order to detect a road surface condition of a road in a traveling direction in a traveling state of a given vehicle, picks an image in front of the vehicle and recognizes a predetermined object on the picked image is also known (for example, see Patent Document 2). In this technique, by using the picked image, a driving lane dividing line such as a white line or a driving lane dividing zone such as a central reservation on a road on which the given vehicle runs is recognized.

Patent Document 1: Japanese Patent No. 2635246
Patent Document 2: Japanese Patent No. 3290318

DISCLOSURE OF INVENTION

PROBLEM TO BE SOLVED BY THE INVENTION

In the conventional art described in the Patent Document 1 described above, in order to capture a preceding vehicle the image pickup position of which is not known, a distance measurement window must be set to cover an entire area of the image. As a result, since an approximately entire area of the image is processed to calculate a distance, calculation processing has a heavy load, long processing time is disadvantageously required.

In the conventional technique described in the Patent Document 2 described above, the processing contents are dedicated to recognition of a white line or the like. For this reason, various pieces of image included in an image to be picked cannot be multilaterally processed.

The present invention has been made in consideration of the above circumstances and has as its object to provide an image processing apparatus, an image processing method, and an image processing program which, when a picked image is processed to calculate a distance to a predetermined object such as a preceding vehicle, can reduce a load on calculation processing, output distance information at a high speed, and multilaterally process various pieces of information included in an image to be picked.

MEANS FOR SOLVING PROBLEM

To solve the problems and achieve the object, an image processing apparatus according to an aspect of the present invention includes an imaging unit which is mounted on a mobile object and picks an image of a predetermined field of view to generate an image; a moving information detection unit which detects moving information including a speed of the mobile object; a processing content setting unit which sets contents of a process to be performed in the image generated by the imaging unit, based on the moving information detected by the moving information detection unit; and a processing calculation unit which performs processing calculation according to the contents of the process set by the processing content setting unit.

The invention may further include an arrival point prediction unit which predicts a point at which the mobile object arrives a predetermined period of time after based on the moving information detected by the moving information detection unit, wherein the processing content setting unit may include a calculation range setting unit which sets a calculation range in which a distance to an object included in the field of view based on a prediction result by the arrival point prediction unit, and the processing calculation unit may include a distance calculation unit which performs distance calculation in the calculation range set by the calculation range setting unit.

In the invention, the arrival point prediction unit may predict a point at which the mobile object arrives a predetermined period of time after based on a function experientially obtained.

In the invention, the arrival point prediction unit may correct the prediction result based on the moving information.

In the invention, the calculation range prediction unit may set the calculation range based on the function experientially obtained.

In the invention, the moving information may be a speed of the mobile object, an acceleration of the mobile object, a moving direction of the mobile object, a moving orientation of the mobile object, position information of the mobile object, a change rate of the moving information, or a combination thereof.

In the invention, the imaging unit may generate a first image signal group picked through a first optical path and a second image signal group picked through a second optical path, and the distance calculation unit may detect an image signal matched with an arbitrary image signal of the first image signal group from the second image signal group, and calculates a distance to the object based on an amount of movement of the detected image signal from the arbitrary image signal.

In the invention, the processing content setting unit may include a switching process unit which selects an image processing range to be calculated by the processing calculation unit from a plurality of image processing ranges included in the image, based on the moving information output from the moving information detection unit, and switches to the selected image processing range and the processing calculation unit may include a distance calculation unit which calculates a distance to an object included in the field of view based on an image signal group corresponding to the image processing range switched by the switching process unit.

In the invention, the moving information may be at least one of a moving speed of the mobile object, a moving acceleration of the mobile object, a moving direction of the mobile object, a moving orientation of the mobile object, and position information of the mobile object.

In the invention, the imaging unit may generate the first image signal group picked through a first optical path and the second image signal group picked through a second optical path, and the distance calculation unit may detect an image signal matched with an arbitrary image signal of the first image signal group from the second image signal group, and calculates a distance to the object based on an amount of movement of the detected image signal from the arbitrary image signal.

The invention may further include a distance calculation unit which calculates a distance from an image pickup position of the imaging unit to an object the image of which is to be picked, wherein the processing content setting unit may include a processing selection unit which selects an image processing method from a plurality of image processing methods, based on the distance from the image pickup position to the object the image of which is to be picked obtained by the distance calculation unit and a speed of the mobile object obtained by the moving information detection unit, and the processing calculation unit may include an image processing unit which applies the image processing method selected by the processing selection unit to perform image processing to the image.

The invention may further include a zone dividing information storage unit which divides a range of an available speed of the mobile object into a plurality of speed zones to store the plurality of speed zones, and divides a range of a distance at which image pickup can be performed by the imaging unit, into a plurality of distance zones to store the plurality of distance zones, wherein the processing selection unit may read from the zone dividing information storage unit a speed zone to which a speed of the mobile object detected by the moving information detection unit belongs, read from the zone dividing information storage unit a distance zone to which a distance to the object the image of which is to be picked calculated by the distance calculation unit belongs, and select an image processing method based on a combination of the read speed zone and the read distance zone.

The invention may further include a closed region setting unit which sets a closed region different for each of the plurality of distance zones; and an object detection unit which detects a predetermined object for each closed region set by the closed region setting unit.

The invention may further include a selection method changing unit which changes a method for selecting the image processing method in the processing selection unit.

In the invention, the imaging unit may include a pair of image pickup optical systems; and a pair of image pickup elements which convert an optical signal output from the pair of image pickup optical systems into an electric signal.

In the invention, the imaging unit may include a pair of waveguide optical system; and an image pickup element which has image pickup regions corresponding respectively to the waveguide optical systems, and converts an optical signal guided by each waveguide optical system into an electric signal in the corresponding image pickup region.

In the invention, the mobile object may be a vehicle.

An image processing method according to another aspect of the present invention includes an imaging step of being mounted on a mobile object and picking an image of a predetermined field of view to generate an image; a moving information detection step of detecting moving information including a speed of the mobile object; a processing content setting step of setting contents of a process to be performed in the image generated by the imaging step, based on the moving information detected by the moving information detection step; and a processing calculation step of performing processing calculation according to the contents of the process set by the processing content setting step.

The invention may further include an arrival point prediction step of predicting a point at which the mobile object arrives a predetermined period of time after based on the moving information detected by the moving information detection step, wherein the processing content setting step may include setting a calculation range in which a distance to an object included in the field of view based on a prediction result by the arrival point prediction step, and the processing calculation step may include performing distance calculation in the calculation range set by the processing content setting step.

In the invention, the processing content setting step may include selecting an image processing range to be calculated by the processing calculation step from a plurality of image processing ranges included in the image, based on the moving information detected by the moving information detection step, and switching to the selected image processing range, and the processing calculation step may include calculating a distance to an object included in the field of view based on an image signal group corresponding to the image processing range switched by the processing content setting step.

The invention may further include a distance calculation step of calculating a distance from an image pickup position in the imaging step to an object the image of which is to be picked, wherein the processing content setting step may include selecting an image processing method from a plurality of image processing methods, based on the distance from the image pickup position to the object the image of which is to be picked obtained by the distance calculation step and a speed of the mobile object obtained by the moving information detection step, and the processing calculation step may include applying the image processing method selected by the processing selection step to perform image processing to the image.

An image processing program according to still another aspect of the present invention is for performing image processing on an image generated by an imaging unit which is mounted on a mobile object and picks an image of a predetermined field of view to generate the image, and includes a moving information detection step of detecting moving information including a speed of the mobile object; a processing content setting step of setting contents of a process to be performed in the image generated by the imaging unit, based on the moving information detected by the moving information detection step; and a processing calculation step of performing processing calculation according to the contents of the process set by the processing content setting step.

The invention may further include an arrival point prediction step of predicting a point at which the mobile object arrives a predetermined period of time after based on the moving information detected by the moving information detection step, wherein the processing content setting step may include setting a calculation range in which a distance to an object included in the field of view based on a prediction result by the arrival point prediction step, and the processing calculation step may include performing distance calculation in the calculation range set by the processing content setting step.

In the invention, the processing content setting step may include selecting an image processing range to be calculated by the processing calculation step from a plurality of image processing ranges included in the image, based on the moving information detected by the moving information detection step, and switching to the selected image processing range, and the processing calculation step may include a distance calculation unit which calculates a distance to an object included in the field of view based on an image signal group corresponding to the image processing range switched by the processing content setting step.

The invention may further include a distance calculation step of calculating a distance from an image pickup position in the imaging step to an object the image of which is to be picked, wherein the processing content setting step may include selecting an image processing method from a plurality of image processing methods, based on the distance from the image pickup position to the object the image of which is to be picked obtained by the distance calculation step and a speed of the mobile object obtained by the moving information detection step, and the processing calculation step may include applying the image processing method selected by the processing selection step to perform image processing to the image.

EFFECT OF THE INVENTION

According to the present invention, there is provided an image processing apparatus, an image processing method, and an image processing program which, when a picked image is processed to calculate a distance to a predetermined object such as a preceding vehicle, can reduce a load on calculation processing, output distance information at a high speed, and multilaterally process various pieces of information included in an image to be picked.

BRIEF DESCRIPTION OF DRAWINGS

FIG. 1 is a block diagram showing a configuration of an image processing apparatus according to a first embodiment of the present invention;

FIG. 2 is a flow chart showing procedures performed until the image processing apparatus shown in FIG. 1 completely outputs distance information;

FIG. 3 is an explanatory diagram conceptually showing distance calculation based on image data obtained by picking image by a stereo camera;

FIG. 4 is an explanatory diagram showing correspondence between right and left image regions before a rectification process;

FIG. 5 is an explanatory diagram showing correspondence between right and left image regions after a rectification process;

FIG. 6 is a flow chart showing procedures of an arrival point prediction process;

FIG. 7 is a diagram for explaining a method of calculating an arrival point in the arrival point prediction process;

FIG. 8 is a diagram showing an example of a result obtained when a predicted arrival point is overlapped on an image picked by an imaging unit;

FIG. 9 is a flow chart showing procedures of an calculation range setting process;

FIG. 10 is a diagram showing an example of a result obtained when a short-distance window is overlapped on an image picked by the imaging unit;

FIG. 11 is a diagram showing an example of a result obtained when a long-distance window is overlapped on an image picked by the imaging unit;

FIG. 12 is a diagram showing an example of a result obtained when a middle-distance window is overlapped on an image picked by the imaging unit;

FIG. 13 is a block diagram showing a configuration of an image processing apparatus according to a second embodiment of the present invention;

FIG. 14 is a flow chart showing procedures of an arrival point prediction process;

FIG. 15 is a diagram for explaining a method of calculating an arrival point in the arrival point prediction process;

FIG. 16 is a diagram for explaining a prediction function selected in the arrival point prediction process;

FIG. 17 is a diagram showing an example of a result obtained when a short-distance window is overlapped on an image picked by an imaging unit;

FIG. 18 is a diagram showing an example of a result obtained when a long-distance window is overlapped on an image picked by the imaging unit;

FIG. 19 is a block diagram showing a configuration of an image processing apparatus according to a third embodiment of the present invention;

FIG. 20 is a diagram for explaining a method of correcting an arrival point in an arrival point prediction process;

FIG. 21 is a block diagram showing a configuration of an image processing apparatus according to a fourth embodiment of the present invention;

FIG. 22 is a block diagram showing a configuration of an image processing apparatus according to a fifth embodiment of the present invention;

FIG. 23 is a flow chart showing procedures performed when distance information in the image processing apparatus shown in FIG. 22;

FIG. 24 is a flow chart showing procedures of a window switching process shown in FIG. 23;

FIG. 25 is a diagram showing an example of a low-speed window selected by the window switching process in FIG. 24;

FIG. 26 is a diagram showing an example of a high-speed window selected by the window switching process in FIG. 24;

FIG. 27 is a diagram showing a state obtained when a low-speed window is overlapped on a picked image;

FIG. 28 is a diagram showing a state obtained when a high-speed window is overlapped on a picked image;

FIG. 29 is a diagram showing an example of distance information formed by an calculation unit;

FIG. 30 is a diagram showing an example of distance information formed by the calculation unit;

FIG. 31 is a block diagram showing a configuration of an image processing apparatus according to a sixth embodiment of the present invention;

FIG. 32 is a flow chart showing procedures performed until distance information in the image processing apparatus shown in FIG. 31;

FIG. 33 is a flow chart showing procedure of a window switching process shown in FIG. 32;

FIG. 34 is a diagram showing an example of a right window selected by the window switching process in FIG. 33;

FIG. 35 is a diagram showing an example of a left window selected by the window switching process in FIG. 33;

FIG. 36 is a diagram showing an example of a through-traffic window selected by the window switching process in FIG. 33;

FIG. 37 is a block diagram showing a configuration of an image processing apparatus according to a seventh embodiment of the present invention;

FIG. 38 is a flow chart showing procedures performed until distance information is output in the image processing apparatus shown in FIG. 37;

FIG. 39 is a flow chart showing procedures including a process of selecting a window on the basis of a type of a road on which a vehicle runs in a window switching process;

FIG. 40 is a diagram showing an example of a freeway window selected by the window switching process;

FIG. 41 is a diagram showing an example of a standard window selected by the window switching process in FIG. 39;

FIG. 42 is a flow chart showing procedures including a process of selecting a window on the basis of tendency of a gradient of a road on which a vehicle runs in the window switching process shown in FIG. 38;

FIG. 43 is a diagram showing an example of a concave-surface window selected by the window switching process in FIG. 42;

FIG. 44 is a diagram showing an example of a convex-surface window selected by the window switching process in FIG. 42;

FIG. 45 is a block diagram showing a configuration of an image processing apparatus according to an eighth embodiment of the present invention;

FIG. 46 is a block diagram showing a configuration of an image processing apparatus according to a ninth embodiment of the present invention;

FIG. 47 is a block diagram showing a configuration of an image processing apparatus according to a tenth embodiment of the present invention;

FIG. 48 is a flow chart showing an outline of an image processing method according to the tenth embodiment of the present invention;

FIG. 49 is a diagram showing an output of a distance image;

FIG. 50 is a diagram showing an image processing method depending on a combination between a distance zone and a speed zone;

FIG. 51 is a diagram showing a display obtained when image processing related to vehicle detection;

FIG. 52 is a diagram showing a display obtained when image processing related to white line detection;

FIG. 53 is a diagram showing another example of an image processing method depending on a combination between a distance zone and a speed zone;

FIG. 54 is a block diagram showing a configuration of an image processing apparatus according to one modification of the tenth embodiment of the present invention;

FIG. 55 is a block diagram showing a partial configuration of an image processing apparatus according to an eleventh embodiment of the present invention; and

FIG. 56 is a diagram showing an example of an image picked by an imaging unit shown in FIG. 55.

DESCRIPTION OF REFERENCE NUMERALS

| 1, 2, 3, 4, 5, 6, 7, 8, 9, 101, 201 | Image processing apparatus |
| 10 | Image pickup unit |
| 11a | Right camera |
| 11b | Left camera |
| 12a, 12b | Lens |
| 13a, 13b | Image pickup element |
| 14a, 14b | A/D conversion unit |
| 15a, 15b | Frame memory |
| 20, 520, 1020, 2020 | Image analyzing unit |
| 21, 521, 1021 | Distance calculation unit |
| 30, 130, 230, 330, 530, 630, 730, 830, 930, 1030 | Control unit |
| 31, 33, 35 | Arrival point prediction unit |
| 32, 34, 36 | Arithmetic range setting unit |
| 40 | Output unit |
| 50, 150, 250, 550, 650, 750, 850, 1050 | Storage unit |
| 51, 551, 651, 751, 851 | Window information |
| 52, 553 | Image information |
| 53 | Steering angle information |
| 54 | Speed information |
| 55 | Arrival point information |
| 56, 554, 1052 | Distance information |

| 57 | Prediction function information |
|---|---|
| 58, 752 | Position information |
| 59, 753 | Map information |
| 60, 160 | Detection unit |
| 61, 661 | Steering angle sensor |
| 62, 561 | Speed sensor |
| 63 | GPS sensor |
| 70, 980 | Radar |
| 71, 81 | Corresponding table |
| 110 | Image pickup unit |
| 111 | Camera |
| 112 | Lens |
| 113 | Image pickup element |
| 114 | A/D conversion unit |
| 115 | Frame memory |
| 116 | Image |
| 116a | Right image |
| 116b | Left image |
| 119 | Stereo-Adapter |
| 119a, 119b, 119c, 119d | Mirror |
| 210, 1120, 5210 | Processing calculation unit |
| 301 | Distance image |
| 320, 340, 360, 1131, 5310, 6310, 7310, 8310, 9310 | Processing content setting unit |
| 401, 402 | Display image |
| 531, 631, 731, 831, 931 | Window switching unit |
| 560, 660, 860 | Probing unit |
| 600, 670, 1160, 1600, 5600, 6600, 7700, 8700, 9870 | Moving information detection unit |
| 652, 852 | Probing information |
| 770 | External communication unit |
| 1021 | Distance information generating unit |
| 1022 | Image processing unit |
| 1031 | Processing selection unit |
| 1051 | Image data |
| 1053 | Image processing method |
| 1054 | Template |
| 1055 | Zone dividing information |
| 1060 | Speed Detection unit |
| 2021 | Distance image generating unit |
| 2022 | Closed region setting unit |
| 2023 | Object detection unit |
| C, C1, C2 | Vehicle |
| Ca | Given vehicle |
| Cb | Preceding vehicle |

BEST MODES FOR CARRYING OUT THE INVENTION

Best modes (to be referred to as embodiments hereinafter) for carrying out the present invention will be described below with reference to the accompanying drawings.

First embodiment

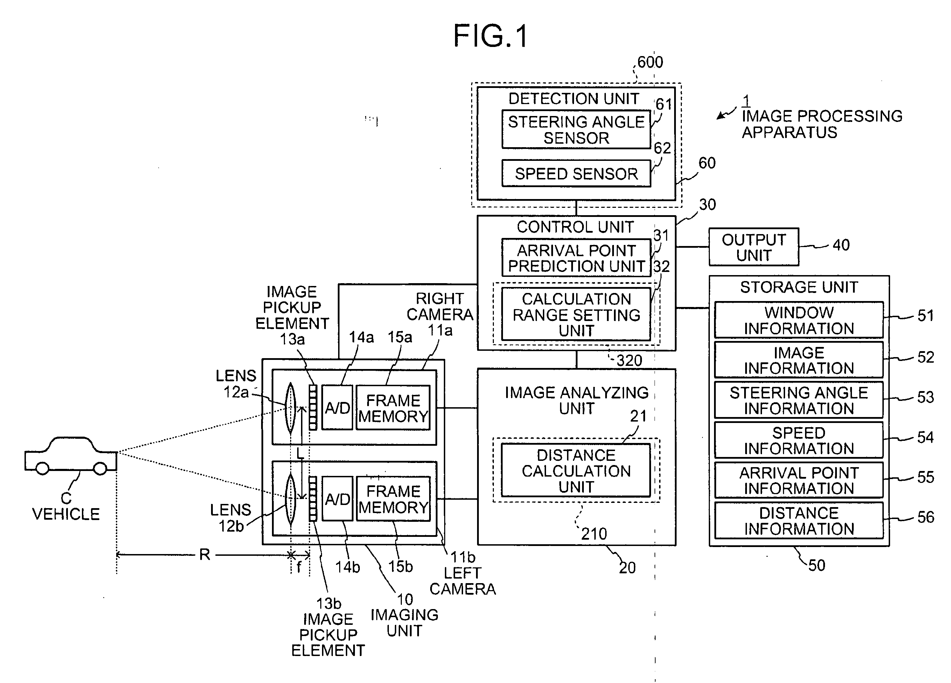

FIG. 1 is a block diagram showing a configuration of an image processing apparatus according to a first embodiment of the present invention. An image processing apparatus 1 shown in FIG. 1 includes: an imaging unit 10 which has a predetermined field of image pickup field and picks an image corresponding to the field of image pickup field to generate an image signal group; an image analyzing unit 20 which analyzes an image signal group generated by the imaging unit 10 to process the image signal group; a control unit 30 which controls all processes and operations of the image processing apparatus 1; an output unit 40 which outputs various pieces of information including distance information; a storage unit 50 which stores the various pieces of information including distance information; and a detection unit 60 which detects moving information of a given vehicle serving as a mobile object such as a given vehicle on which the image processing apparatus 1 is mounted. The imaging unit 10, the image analyzing unit 20, the output unit 40, the storage unit 50, and the detection unit 60 are electrically connected to the control unit 30. Modes of the connection include not only a wired mode but also a wireless mode.

The imaging unit 10 is a stereo camera having a right camera 11a and a left camera 11b which are arranged on the right and left side by side. The right camera 11a includes a lens 12a, an image pickup element 13a, an analog/digital (A/D) conversion unit 14a, and a frame memory 15a. The lens 12a converges light from an arbitrary object arranged in a predetermined field of image pickup view on the image pickup element 13a. The image pickup element 13a is an image pickup element such as a CCD or a CMOS, detects light from the object converted by the lens 12a as an optical signal, converts the optical signal into an electric signal serving as an analog signal to output the electric signal. The A/D conversion unit 14a converts the analog signal output from the image pickup element 13a into a digital signal to output the digital signal. The frame memory 15a stores the digital signal output from the A/D conversion unit 14a and arbitrarily outputs a digital signal group corresponding to one image pickup image as an image signal group corresponding to the field of image pickup view, i.e., image information. On the other hand, the left camera 11b has the same configuration as that of the right camera 11a and includes a lens 12b, an image pickup element 13b, an A/D conversion unit 14b, and a frame memory 15b. The respective constituent components of the left camera 11b have the same functions as the corresponding constituent components of the right camera 11a.

The lenses 12a and 12b serving as one pair of image pickup optical systems held by the imaging unit 10 are separately located with a distance L to have parallel optical axes. The image pickup elements 13a and 13b are separately located with distances f from the lenses 12a and 12b on the optical axes, respectively. The right camera 11a and the left camera 11b picks images of the same object from different positions through different optical paths, respectively. The lenses 12a and 12b are generally constructed by combining a plurality of lenses. For example, the lenses 12a and 12b preferably correct aberrations such as distortions of the lenses.

The image analyzing unit 20 includes a distance calculation unit 21 which processes an image signal group acquired from the imaging unit 10 to calculate a distance to the object the image of which is picked. The distance calculation unit 21 detects a right image signal matched with an arbitrary left image signal in a left image signal group output by the left camera 11b from a right image signal group output by the right camera 11a and calculates a distance to an object located in the field of image pickup view on the basis of an amount of movement which is a distance between the detected right image signal and a corresponding left image signal. More specifically, positions of a right image signal group from the right camera 11a and a left image signal group from the left camera 11b on optical axes of image pickup optical systems are overlapped on a reference, and an arbitrary left image signal in the left image signal group and a right image signal in the right image signal group maximally matched with the left image signal are detected, and an amount of movement I which is a distance from the corresponding left image signal to the right image signal on the image pickup element is obtained. By using the following equation (1) based on the principle of triangular surveying, for example, a distance R from the imaging unit 10 to a vehicle C in FIG. 1 is calculated. In fact, the amount of movement I is preferably obtained on the basis of the number of pixels and a pixel pitch of an image pickup element.

For the descriptive convenience, the parallel stereo is described above. However, crossing of the axes at an angle, different focal distances, different positional relationships between the image pickup elements and the lenses, and the like are calibrated and corrected by rectification, so that a parallel stereo may be realized by calculation processing.

$$R = f \cdot L / I \tag{1}$$

The distance calculation unit 21 calculates a distance to an object corresponding to an arbitrary image signal in an calculation range, i.e., an object corresponding to an arbitrary pixel of the image pickup element. The image analyzing unit 20 forms distance information in which a distance to be calculated to the object and a position of an object in an image are caused to correspond to each other by the distance calculation unit 21 and output the distance information to the control unit 30. The object the distance of which is calculated here is not limited to an object serving as a tangible entity but also an arbitrary object the image of which is to be picked and which includes a road surface or a background such as sky.

The control unit 30 includes a CPU which executes a processing program stored in the storage unit 50 to control various processing operations in the imaging unit 10, the image analyzing unit 20, the output unit 40, the storage unit 50, and the detection unit 60. In particular, the control unit 30 according to the first embodiment includes an arrival point prediction unit 31 and an calculation range setting unit 32. The arrival point prediction unit 31 acquires moving information from the detection unit 60 to predict a point which a given vehicle reaches a predetermined period of time after. the calculation range setting unit 32 selects a window matched with a prediction result of the arrival point prediction unit 31 from pieces of window information stored in window information 51 to set an calculation range in the distance calculation unit 21. The calculation range setting unit 32 outputs the selected window information to the image analyzing unit 20. The window information is information related to a size, a shape, and the like of a window.

The output unit 40 outputs various pieces of information including distance information. For example, the output unit 40 includes a display apparatus such as a liquid crystal display or an organic EL (Electroluminescence) display to display various displayable pieces of information such as an image or the like picked by the imaging unit 10 together with the distance information. Furthermore, the output unit 40 includes an audio output apparatus such as a loudspeaker, and may be constructed to output various pieces of audio information such as a warning based on the distance information or the distance information.

The storage unit 50 includes a ROM in which various pieces of information such as a program and an image processing program for starting a predetermined OS is stored in advance and a RAM in which calculation parameters for processing and various pieces of information input/output to various constituent components are stored. Furthermore, the storage unit 50 stores a window information 51 which stores pieces of window information selected by the calculation range setting unit 32, image information 52 obtained by an image pickup operation by the imaging unit 10, steering angle information 53 detected by a steering angle sensor 61, speed information 54 detected by a speed sensor 62, arrival point information 55 predicted by the arrival point prediction unit 31, and distance information 56 calculated and formed by the distance calculation unit 21.

The image processing program described above can be recorded on a computer readable recording medium such as a hard disk, a flexible disk, a CD-ROM, a CD-R, a CD-RW, a DVD-ROM, DVD±R, a DVD±RW, a DVD-RAM, a MO disk, a PC card, an xD picture card, or a smart media and can be widely circulated.

The detection unit 60 detects moving information of a given vehicle. In particular, the detection unit 60 in the first embodiment includes the steering angle sensor 61 which detects a moving direction of the given vehicle and a speed sensor 62 which detects a moving speed. The steering angle sensor 61 is a sensor which detects a steering angle serving as right and left rotating angles of front wheels as a moving direction of the given vehicle and which calculates a steering angle on the basis of a rotating angle and a rotating direction of a steering wheel. The speed sensor 62 is a speedometer that such as an automobile generally provides. The detection unit 60 outputs the steering angle information detected by the steering angle sensor 61 and the speed information detected by the speed sensor 62 to the control unit 30 as the moving information of the given vehicle. The speed sensor 62 may be a sensor which observes a road surface on which the given vehicle runs to calculate a speed, a sensor which detects an acceleration to calculate a speed, or the like. As a means which detects a moving direction of the given vehicle, in place of the steering angle sensor 61, an angle detection sensor using a gyroscope may be used.

In the first embodiment, the detection unit 60 constitutes at least a part of a moving information detection unit 600 which detects moving information including a speed of a mobile object. The calculation range setting unit 32 constitutes at least a part of a processing content setting unit 320 which sets contents of processes to be performed in an image based on the moving information detected by the moving information detection unit 600. Furthermore, the distance calculation unit 21 constitutes at least a part of a processing calculation unit 210 which performs processing calculation corresponding to the contents of the processes set by the processing content setting unit 320.

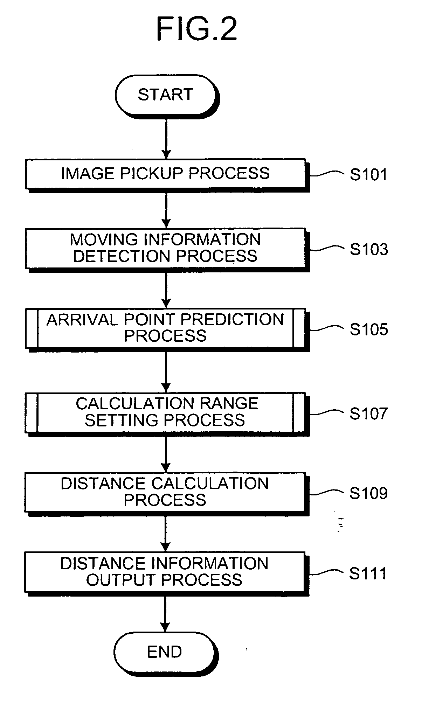

A processing operation executed by the image processing apparatus 1 will be described below with reference to a flow chart in FIG. 2. FIG. 2 is a flow chart showing procedures performed until the image processing apparatus 1 outputs distance information after an image is picked.

As shown in FIG. 2, the imaging unit 10 performs an image pickup process which picks a predetermined field of view and outputs a generated image signal group to the image analyzing unit 20 as image information (step S101). More specifically, in the right camera 11a and the left camera 11b in the imaging unit 10, under the control of the control unit 30, lights are converted from a region included in a predetermined field angle by using the lenses 12a and 12b.

The lights converged by the lenses 12a and 12b are focused on the surfaces of the image pickup elements 13a and 13b and converted into electric signals (analog signals), respectively. The analog signals output from the image pickup elements 13a and 13b are converted into digital signals by the A/D conversion units 14a and 14b, respectively, and the converted digital signals are temporarily stored in the frame memories 15a and 15b, respectively. The digital signals temporarily stored in the frame memories 15a and 15b are sent to the image analyzing unit 20 a predetermined period of time after.

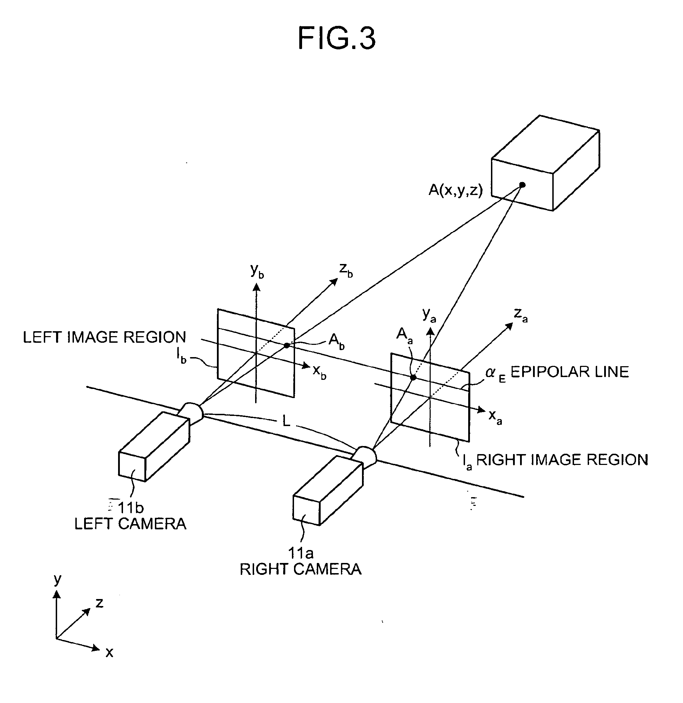

FIG. 3 is an explanatory diagram conceptually showing an image pickup process by a fly-eye stereo camera. FIG. 3 shows a case in which an optical axis $z_a$ of the right camera 11a and an optical axis $z_b$ of the left camera 11b are parallel to each other. In this case, a point corresponding to a point $A_b$ in a left image region $I_b$ corresponding to a coordinate system (left camera coordinate system) inherent in the left camera is present on a straight line $\alpha_E$ (epipolar line) in a right image region $I_a$ corresponding to a coordinate system (right camera coordinate system) inherent in the right camera. FIG. 3 shows a case in which a corresponding point in the right camera 11a is searched for with reference to the left camera 11b. In contrast to this, the right camera may be used as a reference.

After the image pickup process in step S101, the detection unit 60 performs a moving information detection process which detects moving information of the given vehicle to output the moving information to the control unit 30 (step S103). In this case, in the detection of the moving information, the steering angle sensor 61 detects a steering angle as a moving direction, and the speed sensor 62 detects a moving speed. The arrival point prediction unit 31 of the control unit 30 performs an arrival point prediction process which an arrival point of the given vehicle a predetermined period of after on the basis of the moving information from the detection unit 60 (step S105). The calculation range setting unit 32 performs an calculation range setting process which sets an calculation range to be processed by the distance calculation unit 21 on the basis of a prediction result of the arrival (step S107). The control unit 30 outputs information of the set calculation range to the image analyzing unit 20.

In the image analyzing unit 20, the distance calculation unit 21 calculates a distance to an arbitrary object the image of which is picked within the set calculation range, forms distance information in which the calculated distance and the position of the object in the image are caused to correspond to each other, and outputs the distance information to the control unit 30 (step S109).

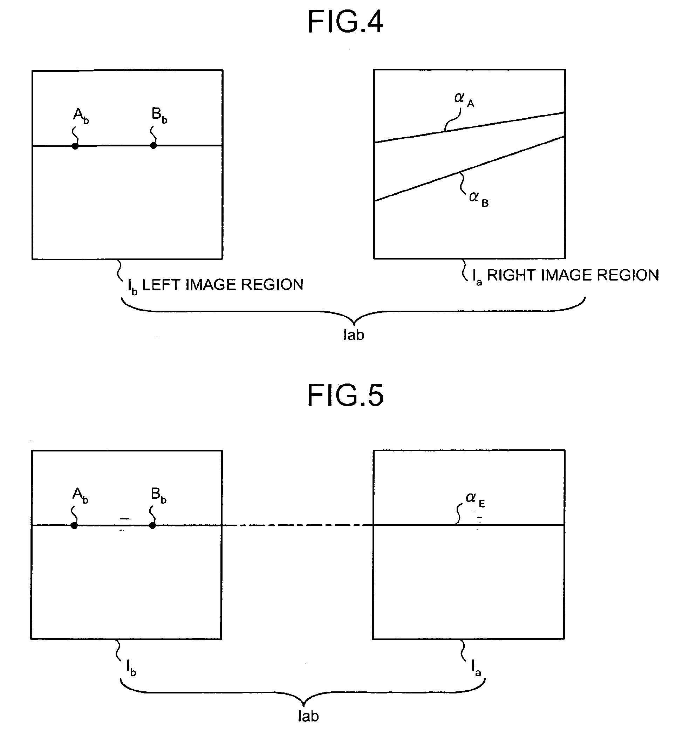

In order to perform the distance calculation in step S109, coordinate values of all pixel points or some pixel points in the field of view the image of which is picked by using the right and left camera coordinate systems. However, prior to this calculation, calculation of coordinate values in the left and right camera coordinate system and corresponding (corresponding point searching) between the coordinate values are performed. When a three-dimension is reconstructed by the corresponding point searching, a pixel point located on an arbitrary straight line passing through an image serving as a reference is desirably located on the same straight line in the other image (epipolar condition of constraint). However, the epipolar condition of constraint is not always satisfied. For example, in a stereo image region $I_{ab}$ shown in FIG. 4, a point of the right image region $I_a$ corresponding to the point $A_b$ in the left image region $I_b$ serving as a reference is present on a straight line $\alpha_A$, and a point in the right image region $I_a$ corresponding to a point $B_b$ in the left image region $I_b$.

When the epipolar condition of constraint is not satisfied, a searching range cannot be narrowed down, and an amount of calculation in searching of a corresponding point is vast. In such a case, the image analyzing unit 20 performs a process (rectification process) which normalizes the right and left camera coordinate systems in advance to convert the state into a state in which the epipolar condition of constraint is satisfied. FIG. 5 shows a corresponding relationship between the right and left image regions after the rectification process. As shown in FIG. 5, when the epipolar condition of constraint is satisfied, searching can be performed such that the searching range is narrowed to the epipolar line $\alpha_E$. For this reason, an amount of calculation required for searching a corresponding point can be reduced.

An example of a corresponding point searching method will be described below. In the referenced left image region $I_b$, a local region is set near an interested pixel point, and the same region as the local region is set on the corresponding epipolar line $\alpha_E$ in the right image region $I_a$. A local region having the highest degree of similarity to the local region in the left image region $I_b$ is searched for while the local region in the right image region $I_a$ is scanned on the epipolar line $\alpha_E$. As a result of the searching, a center point of a local region having the highest degree of similarity is set as a corresponding point of a pixel point in the left image region $I_b$.

As the degree of similarity used in the corresponding point searching, a sum (SAD: Sum of Absolute Difference) of absolute values of differences between pixel points in the local region, a sum of squares (SSD: Sum of Squared Difference) of differences between pixel points in the local region, or normalized cross correlation (NCC) between pixel points in the local region can be applied. When the SAD or the SSD of these degrees of similarity is applied, a point having a minimum value is set as a point having the highest degree of similarity. When the NCC is applied, a point having a maximum value is set as a point having the highest degree of similarity.

Subsequent to step S109 described above, the control unit 30 outputs the distance information and predetermined processing information based on the distance information to the output unit 40 (step S111), and one series of processing operations are finished. The control unit 30 arbitrarily stores the image information 52, the steering angle information 53 the speed information 54, the arrival point information 55, and the distance information 56 serving as pieces of information generated in the various processing steps in the storage unit 50.

The series of processes are continuously repeated in the absence of a designation of a predetermined end of processes or a designation of interruption from a passenger or the like of a given vehicle. The processes described above are described as processes to be sequentially executed. However, in fact, independent processing operations are parallel performed by a processor to increase a speed of a processing cycle. The image pickup process in step S101 may be performed immediately after any one of the processes in step S103, step S105, and step S107.

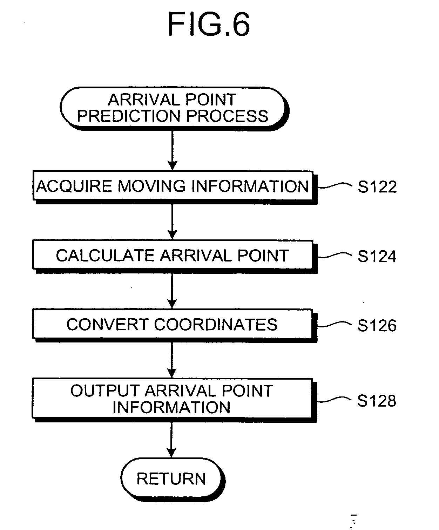

An arrival point prediction process in step S105 shown in FIG. 2 will be described below. FIG. 6 is a flow chart showing procedures of the arrival point prediction process performed by the arrival point prediction unit 31. As shown in FIG. 6, the arrival point prediction unit 31 acquires moving information from the detection unit 60 (step S122) and calculates an arrival point of the given vehicle after a predetermined period of time (step S124). In this calculation, the arrival point prediction unit 31 calculates an arrival point in a coordinate system of a real space. Thereafter, the position is converted into coordinates to the coordinate system on an image pickup image (step S126), the converted coordinates of the arrival point are output to the calculation range setting unit 32 as arrival point information (step S128), and the arrival point prediction process is ended.

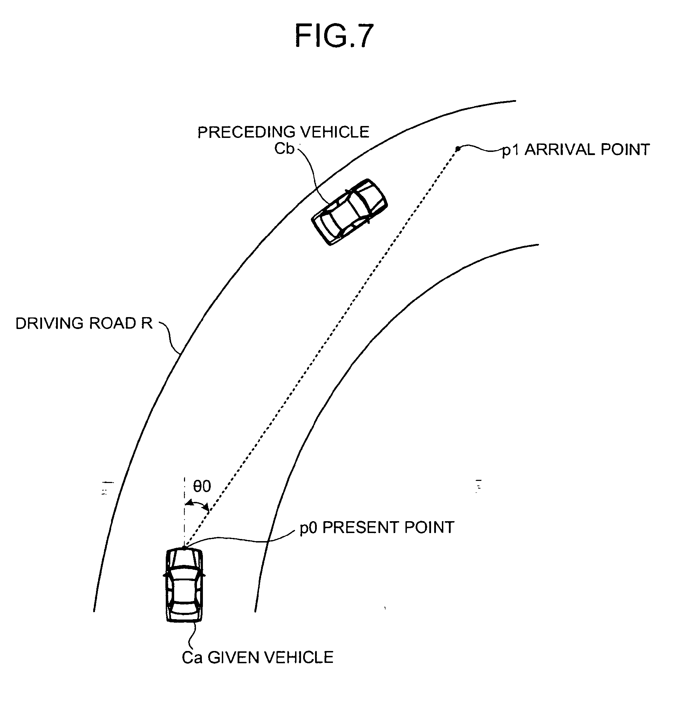

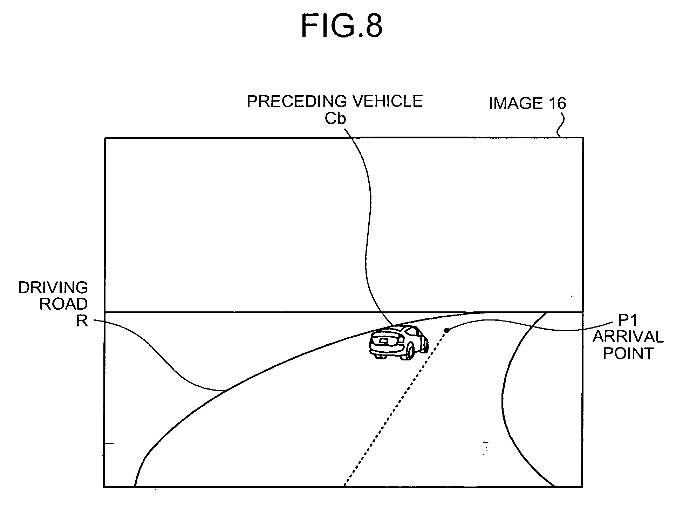

In the calculation of the arrival point in step S124, the arrival point prediction unit 31 calculates coordinates of an arrival point after a predetermined period of time on the assumption that the given vehicle linearly moves at a speed detected by the speed sensor 62 in a moving direction detected by the steering angle sensor 61. For example, as shown in FIG. 7, when a given vehicle Ca runs on a driving road R curved to the right, the arrival point prediction unit 31 calculates coordinates of an arrival point p1 after a predetermined period of time on the assumption that the given vehicle goes linearly at a speed detected by the speed sensor 62 in a moving direction detected by the steering angle sensor 61 at a present point p0, i.e., a direction having a steering angle of θ0. Thereafter, the arrival point prediction unit 31 converts an arrival point p1 in the coordinate system in the real space into an arrival point P1 corresponding to the coordinate system on an image 16 as shown in FIG. 8, and outputs the coordinates as arrival point information.

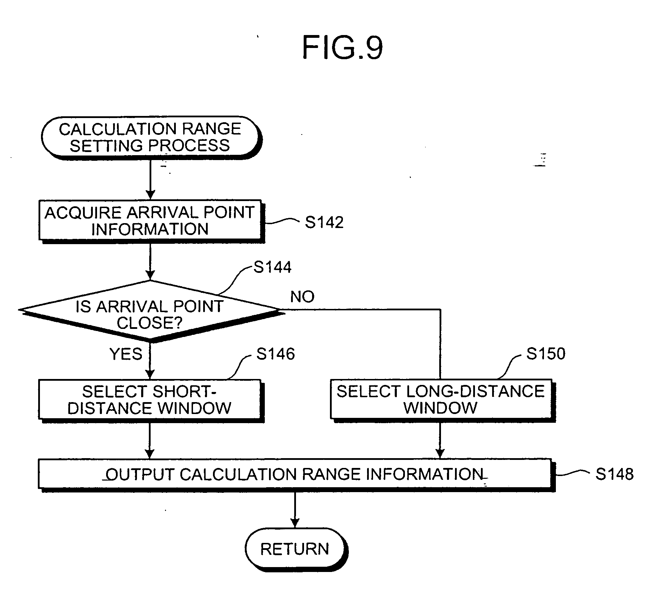

Subsequently, an calculation range setting process in step S107 shown in FIG. 2 will be described below. FIG. 9 is a flow chart showing procedures of the calculation range setting process performed by the calculation range setting unit 32. As shown in FIG. 9, the calculation range setting unit 32 acquires arrival point information from the arrival point prediction unit 31 (step S142). Thereafter, the calculation range setting unit 32 performs a process of setting an calculation range on the basis of the acquired arrival point information (steps S144 to S150). More specifically, the calculation range setting unit 32 determines whether the arrival point is close to the given vehicle (step S144). When the arrival point is close to the given vehicle (step S144: Yes), a short-distance window which is maximally matched with the arrival point information is selected as an image processing window which regulates an calculation range from the window information 51 stored in the storage unit 50 (step S146), and the window information of the selected short-distance window is output to the image analyzing unit 20 as information of the calculation range (step S148). On the other hand, when the arrival point is far from the given vehicle (step S144: No), the calculation range setting unit 32 selects a long-distance window which is maximally matched with the arrival point information from the window information 51 (step S150) and outputs the window information to the image analyzing unit 20 (step S148).

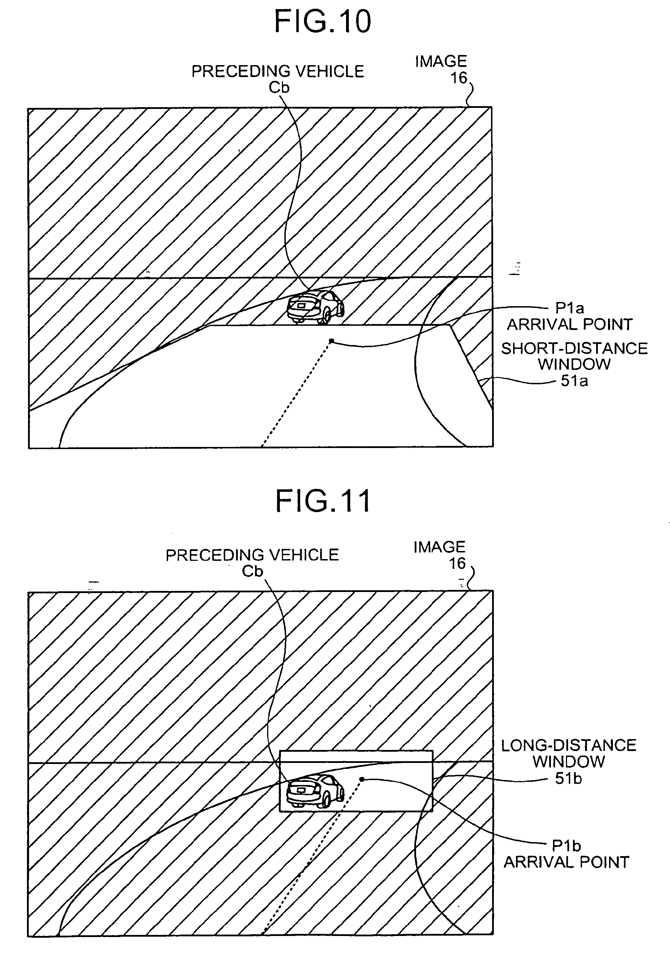

An example of a window selected by the calculation range setting unit 32 will be described below. FIG. 10 is a diagram obtained when an arrival point P1a predicted by the arrival point prediction unit 31 and a short-distance window 51a selected by the calculation range setting unit 32 are overlapped on the image 16 the image of which is picked by the imaging unit 10. The short-distance window 51a is, as shown in FIG. 10, an approximately trapezoidal polygonal window including the arrival point P1a therein. The short-distance window 51a is a window selected when the arrival point P1a is relatively close to the given vehicle and includes a periphery of the arrival point P1a and a periphery of a route extending from the given vehicle to the arrival point P1a. In the short-distance window 51a, a height of the approximately trapezoidal shape and a length of the upper base are regulated by a distance to the arrival point P1a, and a lateral position of the upper base is regulated by a direction to the arrival point P1a.

On the other hand, FIG. 11 is a diagram obtained by overlapping an arrival point P1b on a long-distance window 51b. The long-distance window 51b, as shown in FIG. 11, is a rectangular window including a peripheral region around the arrival point P1b. The window is selected when the arrival point P1b is located at a position relatively far from the given vehicle. On the long-distance window 51b, a distance to the arrival point P1b regulates a window size.

The window information 51 held by the storage unit 50 stores pieces of window information regulated by using a direction and a distance to a predicted arrival point as parameters. The calculation range setting unit 32 selects the short-distance window 51a, the long-distance window 51b, or the like as a window which is maximally matched with the predicted arrival point from the pieces of window information. At this time, the calculation range setting unit 32, for example, may store a corresponding table between parameters and window information and refer to the corresponding table in accordance with various combinations of the parameters to select a window to be selected.

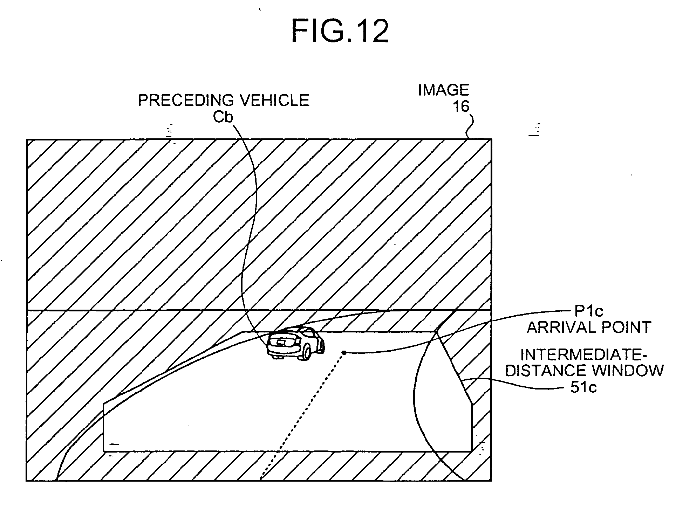

In the flow chart shown in FIG. 9, a short-distance window or a long-distance window is selected. However, a choice may be added to select, for example, an intermediate-distance window. One example of this is shown in FIG. 12. An intermediate-distance window 51c shown in FIG. 12 includes a periphery of an arrival point P1c located between the short-distance point and the long-distance point from the given vehicle and a periphery of a portion on a route extending from the given vehicle to the arrival point P1c except for a range close to the given vehicle. The number of choices is not limited to the number in the example, and windows of various types corresponding to the large number of choices are set. Different windows may be substantially designed to be selected for an arbitrary combination of parameters.

The image processing apparatus 1 according to the first embodiment described above predicts an arrival point of a given vehicle after a predetermined period of time on the basis of steering angle information and speed information serving as moving information and sets an limits an calculation range depending on the predicted arrival point to calculate a distance. For this reason, in comparison with a conventional image processing apparatus which calculates a distance to all image signals of image information, a time required for distance calculation can be shortened. As a result, the image processing apparatus 1 can shorten processing time required until distance information is output after image information is acquired, and the distance information can be output at a high speed.

Second embodiment

A second embodiment of the present invention will be described below. In the first embodiment described above, in the arrival point prediction process in step S105, the arrival point prediction unit 31 calculates an arrival point of a given vehicle a predetermined period of time after such that the given vehicle moves linearly at a speed detected by the speed sensor 62 in a moving direction detected by the steering angle sensor 61. However, in the second embodiment, with reference to a change rate of a steering angle serving as a change rate of a moving direction, an arrival point is calculated by using a function which is experientially calculated.

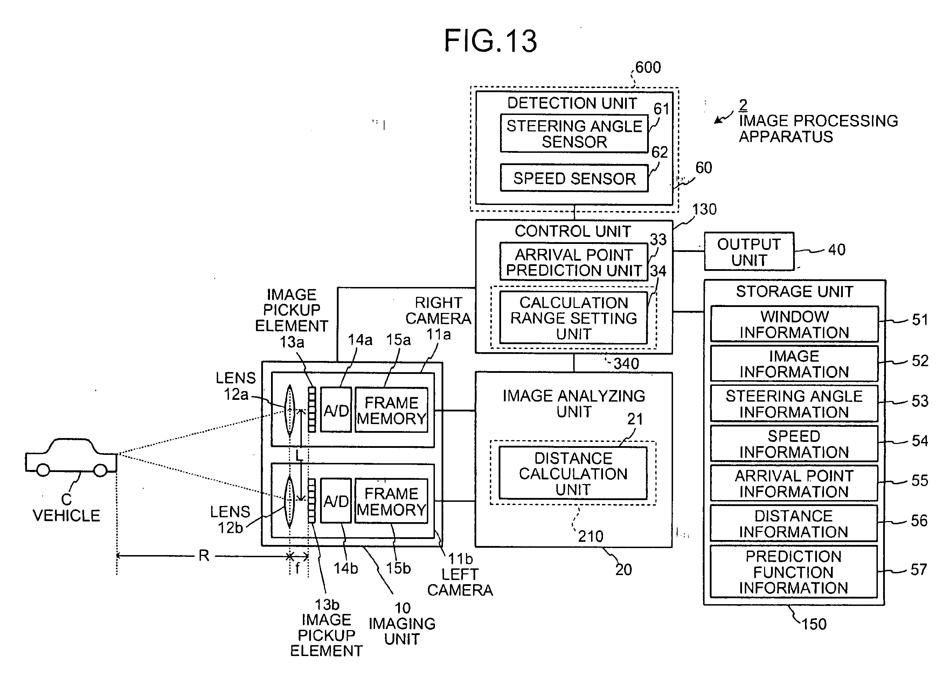

FIG. 13 is a block diagram showing a configuration of an image processing apparatus according to the second embodiment of the present invention. An image processing apparatus 2 shown in FIG. 13 includes a control unit 130 in place of the control unit 30 of the image processing apparatus 1 according to the first embodiment. The control unit 130 includes, in place of the arrival point prediction unit 31 and the calculation range setting unit 32 included in the control unit 30, an arrival point prediction unit 33 and an calculation range setting unit 34 (at least a part of a processing content setting unit 340) having the same functions as those of the arrival point prediction unit 31 and the calculation range setting unit 32. The image processing apparatus 2 includes a storage unit 150 in place of the storage unit 50. the storage unit 150 further stores prediction function information 57 in which the storage contents in the storage unit 50 and a plurality of functions selected by the arrival point prediction unit 33. The remaining configuration is the same as that in the first embodiment. The same reference numerals as in the first embodiment denote the same parts in the second embodiment.

The image processing apparatus 2 executes an image pickup process to a process of outputting distance information shown in the flow chart in FIG. 2. With respect to a prediction method of an arrival point in the arrival point prediction process and characteristics of a window selected in an calculation range setting process, the image processing apparatus 2 is different from the image processing apparatus 1.

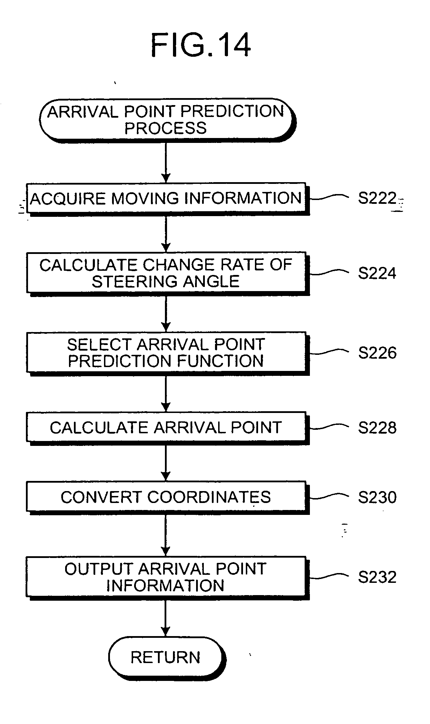

An arrival point prediction process executed by the image processing apparatus 2 will be described below. FIG. 14 is a flow chart showing procedures of an arrival point prediction process performed by the arrival point prediction unit 33. As shown in FIG. 14, the arrival point prediction unit 33 acquires steering angle information and speed information as moving information from the detection unit 60 (step S222), calculates a change rate of a steering angle (step S224), selects an appropriate prediction function from the prediction function information 57 stored in the storage unit 150 on the basis of the steering angle, the change rate of the steering angle, and the speed (step S226), and calculates an arrival point of a given vehicle a predetermined period of time after according to the selected prediction function (step S228). Furthermore, the arrival point prediction unit 33 performs conversion of coordinates as in step S126 in the first embodiment with respect to the calculated arrival point (step S230), and outputs the converted coordinates of the arrival point to the calculation range setting unit 34 as arrival point information (step S132) to end the arrival point prediction process.

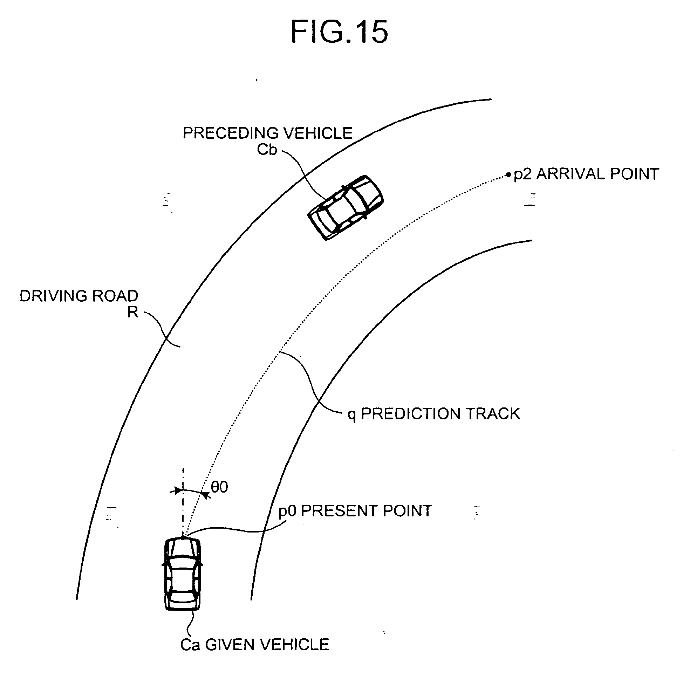

The prediction function selected by the arrival point prediction unit 33 in step S226 is a function experientially calculated and is a function regulated by using the steering angle, the change rate of the steering angle, and the speed. Furthermore, functionally, the prediction function is a function which predicts a track of the given vehicle, a track drawn by the prediction function by using time as a variable expresses a prediction track of the given vehicle. For example, as shown in FIG. 15, a prediction function selected at a present point p0 of a given vehicle Ca draws a track indicated by a broken line by using time as a variable. The arrival point prediction unit 33 recognizes prediction track q of the given vehicle Ca after the present point p0. In step S228, coordinates of an arrival point p2 a predetermined period of time after on the track.

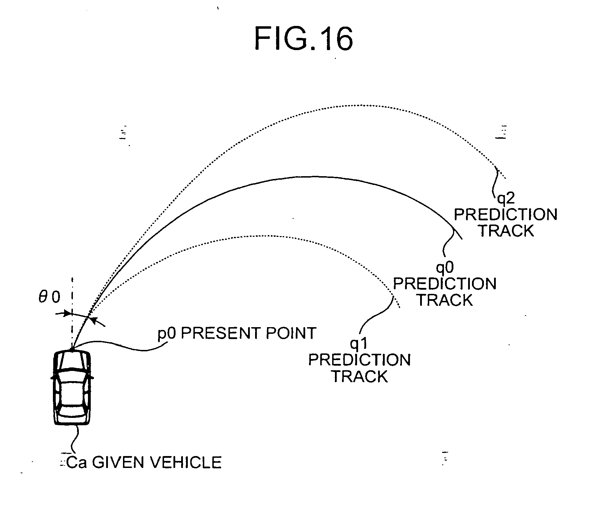

In this case, a relationship between the prediction function selected by the arrival point prediction unit 33 and the steering angle, the change rate of the steering angle, and the speed serving as parameters for regulating the prediction function will be described below with reference to FIG. 16. FIG. 16 shows a state in which the given vehicle Ca moves from the present point p0 at a speed v0 in a direction having a steering angle θ0. The change rate of the steering angle calculated in step S224 is a difference Δθ0 obtained by subtracting a steering angle detected immediately before the present point p0 from the steering angle detected at the present point p0. For example, when an absolute value of the difference Δθ0 is 0, the arrival point prediction unit 33 predicts that the given vehicle Ca continuously moves while keeping the present steering angle and selects a prediction function corresponding to a prediction track q0 obtained at this time. On the other hand, when the difference Δθ0 is a positive value, the arrival point prediction unit 33 predicts that the given vehicle Ca moves while increasing the steering angle, and selects a prediction function corresponding to a prediction track q1 having a curvature radius smaller than that of the prediction track q0. On the other hand, when the difference Δθ0 is a negative value, the arrival point prediction unit 33 predicts that the given vehicle Ca moves while decreasing the steering angle, and selects a prediction function corresponding to a prediction track q2 having a curvature radius larger than that of the prediction track q0. The sizes of the curvature radius of the prediction tracks q1 and q2 are calculated with reference to the size of the difference Δθ0 by using the curvature radius of the prediction track q0 as a standard.

As another case, for example, when a steering angle at the present point p0, a change rate of the steering angle, and the speed are given by θ0, Δθ0, and v0, respectively, the prediction track q0 is applied. When the speed is given by v1 (>v0), the prediction track q1 having a curvature radius smaller than that of the prediction track q0 is applied. When the speed is v2 (<v0), the prediction track q2 having a curvature radius larger than that of the prediction track q0 is applied. Furthermore, depending on a combination of the steering angle, the change rate of the steering angle, and the speed, various prediction functions can be regulated in various cases.

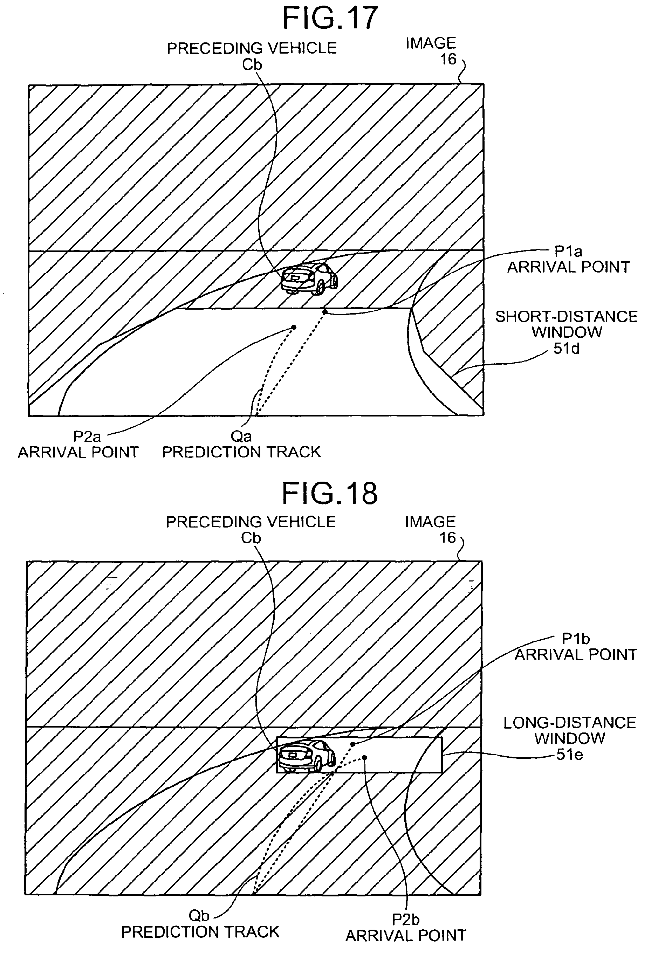

A window selected by the calculation range setting unit 34 in the calculation range setting process will be described below. FIG. 17 is a diagram obtained by overlapping an arrival point P2a calculated by the arrival point prediction unit 33, a selected prediction route Qa, and a short-distance window 51d selected by the calculation range setting unit 34 from the window information 51 on the image 16 picked by the imaging unit 10. The short-distance window 51d corresponds to the short-distance window 51a described in the first embodiment and is similar to the short-distance window 51a since the short-distance window 51d includes a periphery of the arrival point P2a and a periphery of the prediction route Qa extending from the given vehicle to the arrival point P2a. The short-distance window 51d is different from the short-distance window 51a in that a boundary between the right and left windows is formed by a bent line along the prediction route Qa. As the bent line, a curved line may be used.

On the other hand, FIG. 18 is a diagram obtained by an arrival point P2b, a prediction route Qb, and a long-distance window 51e on the image 16. The long-distance window 51e is a rectangular window including a region around the arrival point P2b, and is similar to the long-distance window 51b described in the first embodiment. The calculation range setting unit 34 may store a corresponding table constituted by, for example, an arrival point, a predicted route or a prediction function, and window information and refer to the corresponding table depending on various combinations of these elements to determine a window to be selected.

In the prediction for the arrival point in the second embodiment, an arrival point a predetermined period of time after is obtained by using a prediction function experientially determined to predict a track and using a steering angle, a change rate of the steering angle, and a speed at a present point as parameters. For this reason, in comparison with prediction for an arrival point based on linear movement in the first embodiment, prediction can be performed with higher reliability. A difference between arrival points predicted by both the methods is shown in FIG. 17 such that the predicted arrival points are shown in the same image. The arrival point P2a predicted on the basis of the curved prediction track Qa is predicted as a position which is out of the linearly predicted arrival point P1a to the lower left side. As shown in the same image in FIG. 18, in the long-distance region, the arrival point P2b predicted on the basis of the prediction route Qb is predicted as a position which is out of the linearly predicted arrival point P1b to the lower right side in the image.

In the second embodiment, a track is predicted by using a prediction function based on a rule of thumb. In particular, in calculation in the short-distance region, since a boundary between the right and left windows is formed by a bent line or a curved line on the basis of the prediction track, an calculation range can be more strictly limited, and an unnecessary calculation region can be omitted. As a result, processing time taken for calculation can be further shortened.

In embodiment 2, the prediction function is selected by using the steering angle, the change rate of the steering angle, and the speed as parameters. However, parameters related to the selection are not limited to the parameters mentioned above. For example, an acceleration may be added as a parameter, or an acceleration may be used in place of the change rate of the steering angle to select a prediction function. Furthermore, an orientation of movement may be additionally detected in place of the steering angle and used as a parameter.

In the image processing apparatus 2 according to the second embodiment described above, an arrival point and prediction track are strictly predicted by using the prediction function, and, accordingly, the calculation range is set and limited to calculate a distance. For this reason, time required for distance calculation can be shortened in comparison with a conventional image processing apparatus which performs distance calculation to all image signals of image information. As a result, the image processing apparatus 2 can shorten processing time required until distance information is output after the image information is acquired and output the distance information at a high speed.

Third embodiment

A third embodiment of the present invention will be described above. In the first and the second embodiments described above, an arrival point prediction unit calculates an arrival point of a given vehicle a predetermined period of time after on the basis of steering angle information and speed information. However, in the third embodiment, position information of the given vehicle is detected, and an arrival point a predetermined period of time after is calculated with reference to map information serving as geographical information near a present position.

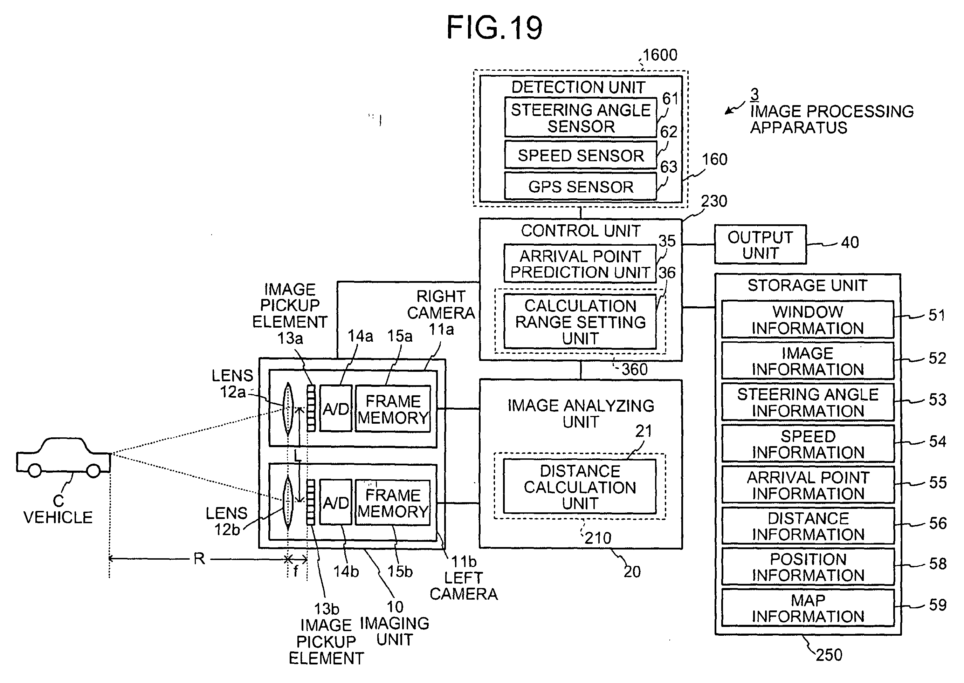

FIG. 19 is a block diagram showing a configuration of an image processing apparatus according to the third embodiment of the present invention. The image processing apparatus 3 shown in FIG. 19 includes a detection unit 160 (at least a part of a moving information detection unit 1600) obtained by adding a GPS (Global Positioning System) sensor 63 to the detection unit 60 of the image processing apparatus 1 according to the first embodiment. The image processing apparatus 3 includes a control unit 230 in place of the control unit 30. The control unit 230 includes, in place of the arrival point prediction unit 31 and the calculation range setting unit 32, an arrival point prediction unit 35 and an calculation range setting unit 36 (part of a processing content setting unit 360) having the same functions as that of the arrival point prediction unit 31 and the calculation range setting unit 32. Furthermore, the image processing apparatus 3 includes a storage unit 250 in place of the storage unit 50. The storage unit 250 stores, in addition to storage contents of the storage unit 50, position information 58 serving as position information detected by the GPS sensor 63 and map information 59 referred to on the basis of the detected position information. The remaining configuration is the same as that in the first embodiment. The same reference numerals as in the first embodiment denote the same parts in the second embodiment.

As in the procedures of the image processing apparatus 1 described in the first embodiment, the image processing apparatus 3 executes an image pickup process to a process of outputting distance information shown in the flow chart in FIG. 2. The image processing apparatus 3 is different from the image processing apparatus 1 in that position information is further detected in the moving information detection process and that an arrival point is corrected on the basis of map information in the arrival point prediction process.

The moving information detection process executed by the image processing apparatus 3 will be described below. In the detection unit 160, as in the detection unit 60 of the image processing apparatus 1, the steering angle sensor 61 detects a steering angle, and the speed sensor 62 detects a speed. Thereafter, the GPS sensor 63 detects a present position of a given vehicle. Each of the sensors outputs a detected result to the control unit 230, respectively.

An arrival point prediction process executed by the image processing apparatus 3 will be described below. The arrival point prediction unit 35, like the arrival point prediction unit 31 of the image processing apparatus 1, calculates coordinates of an arrival point after a predetermined period of time on the basis of the steering angle information and the speed information on the assumption that the given vehicle linearly moves. Thereafter, the arrival point prediction unit 35 refers to the map information 59 stored by the storage unit 250 on the basis of the position information detected by the GPS sensor 63 to correct coordinates of the calculated arrival point. The map information to be referred to is peripheral geographical information including a present position, for example, the map information includes information of a width, inclination of a road on which the vehicle runs, a curvature of a curve, and the like.

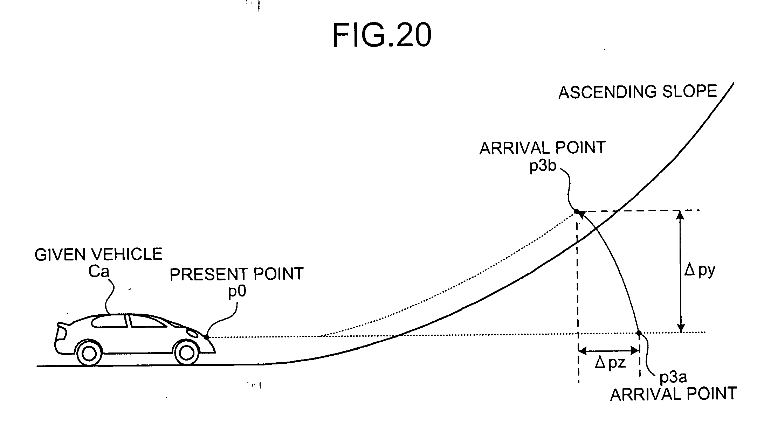

As show in FIG. 20, when it is detected by the referred map information that the given vehicle approaches to an ascending slope, the arrival point prediction unit 35 converts an arrival point p3a calculated by a linear track into an arrival point p3b having a distance equal to the arrival point p3a along the ascending slope. In this conversion, the arrival point prediction unit 35 corrects the coordinates of the arrival point by $\Delta$pz in the moving direction and $\Delta$py in the vertical direction. In this case, a position of a window set in the calculation range setting process is vertically corrected on the pickup image.

In the above description, a track is corrected on the basis of information of the inclination of the ascending slope to correct the position of the arrival point. However, correction may be performed in consideration of a decrease in speed caused by running on the ascending slope. When it is detected that the given vehicle runs on a descending slope, correction may be performed in consideration of an increase in speed. Furthermore, various corrections can be performed on the basis of various pieces of map information. When the various corrections are performed, in the image processing apparatus 3, an arrival point can be predicted with higher reliability without being influenced by a geographical condition of a driving road. As described in the second embodiment, by using a change rate of a steering angle serving as a change rate of a moving direction of the given vehicle, an arrival point may be predicted on the basis of a rounded track.

In the image processing apparatus 3 according to the third embodiment described above, position information is acquired by using a GPS, and an calculation range is set and limited depending on the arrival point corrected on the basis of the map information corresponding to the acquired position information. For this reason, in comparison with a conventional image processing apparatus which performs distance calculation to all image signals of image information, time required for the distance calculation can be shortened. As a result, the image processing apparatus 3 can shorten processing time required until the distance information is output after the image information is acquired, and can output the distance information at a high speed.

In the third embodiment, on the basis of the image processing apparatus 1, by further using the GPS, an arrival point is corrected with reference to the map information corresponding to the position information. However, an calculation method using the prediction function described in the image processing apparatus 2 according to the second embodiment described above may be further applied to perform an arrival point prediction process. Furthermore, map information may be acquired from the outside of the apparatus by using a GPS to correct a prediction track on the basis of the acquired map information.

Fourth embodiment

A fourth embodiment of the present invention will be described below. In the first to the third embodiments described above, a distance to a picked object is detected by processing an image signal group from the imaging unit 10. However, in the fourth embodiment, a distance to an object located in a field of image pickup view is detected by a radar.

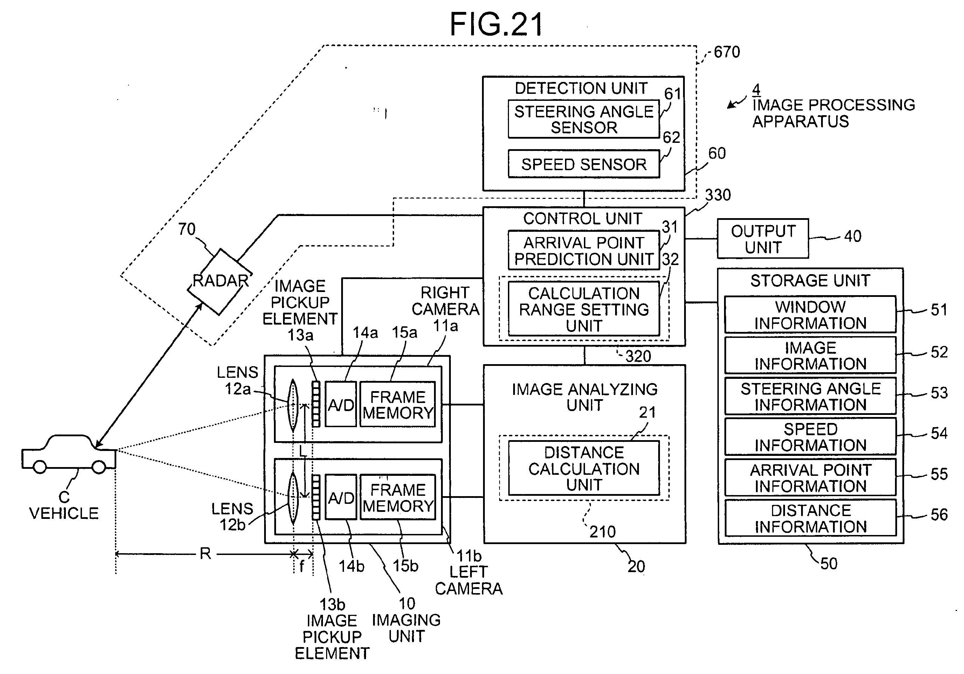

FIG. 21 is a block diagram showing a configuration of an image processing apparatus according to the fourth embodiment of the present invention. An image processing apparatus 4 shown in FIG. 21 includes the image processing apparatus 1 according to the first embodiment described above, a radar 70, and a control unit 330 having a function of controlling the radar 70 in place of the control unit 30. The remaining configuration is the same as that in the first embodiment. The same reference numerals as in the first embodiment denote the same parts in the fourth embodiment. In the fourth embodiment, the detection unit 60 and the radar 70 constitute at least a part of a moving information detection unit 670.

The radar 70 transmits a predetermined outgoing wave, receives a reflected wave obtained by reflecting the outgoing wave by an object surface, and detects a distance from the radar 70 to the object which reflects the outgoing wave and a direction in which the object is located on the basis of an outgoing state and a receiving state. The radar 70 detects a distance to the object which reflects the outgoing wave and a direction of the reflection on the basis of an outgoing angle of the outgoing wave, an incident angle of the reflected wave, a receiving intensity of the reflected wave, time until the reflected wave is received after the outgoing wave is transmitted, and changes in frequency in the received wave and the reflected wave. The radar 70 outputs the distance to the object located in the field of image pickup view of the imaging unit 10 to the control unit 330 together with the direction in which the object is located. The radar 70 transmits, for example, a laser beam, an infrared ray, a millimeter wave, a microwave, an ultrasonic wave, or the like as a transmitter wave.

In the image processing apparatus 4 according to the fourth embodiment, since a distance is detected by the radar 70 in place of calculation of a distance by processing image information from the imaging unit 10, the distance information can be acquired at a higher speed and a high accuracy.

In the image processing apparatus 4, matching between a positional relationship in image signal group picked by the imaging unit 10 and a positional relationship in a detection range of the radar 70 is obtained in advance as described below to perform processes. For example, the image processing apparatus 4 performs an image pickup process by the imaging unit 10 and a detection process by the radar 70 to an object having a known shape, positions of the known object processed by the imaging unit 10 and the radar 70 are obtained. Thereafter, the image processing apparatus 4 uses the method of least squares or the like to obtain a relationship between the positions of the known objects processed by the imaging unit 10 and the radar 70, and matches the positional relationship in the image signal group picked by the imaging unit 10 and the positional relationship in the detection range of the radar 70.

In the image processing apparatus 4, even though an original point of detection of the imaging unit 10 and an original point of detection of the radar 70 are different from each other, if distances from the image pickup point and the detection point to the image processing apparatus 4 are sufficiently long, it can be understood that an image pickup original point and a detection original point are almost overlapped. Furthermore, when matching between the positional relationship in the image signal group picked by the imaging unit 10 and the positional relationship in the detection range of the radar 70 is accurately performed, the difference between the image pickup original point and the detection original point can be corrected by geometric conversion.

In the image processing apparatus 4, radar detection points of the radar 70 are preferably set to be located at predetermined intervals in a pixel row in which image signals of the image signal group picked by the imaging unit 10. When the radar detection points are not set as described above, interpolation points of the radar detection points are obtained in the same pixel row as the row of the image signals by using primary interpolation or the like on the basis of a plurality of radar detection points located near the image signals, and a detection process may be performed by the interpolation points.

In the image processing apparatuses according to the first to the fourth embodiments, an arrival point a predetermined period of time after is predicted by using moving information detected at a present point. However, a future arrival point, a future prediction track, or the like may be predicted on the basis of arrival point information, moving information, and the like of time-series stored in the storage unit, or correction may be performed.

Fifth embodiment

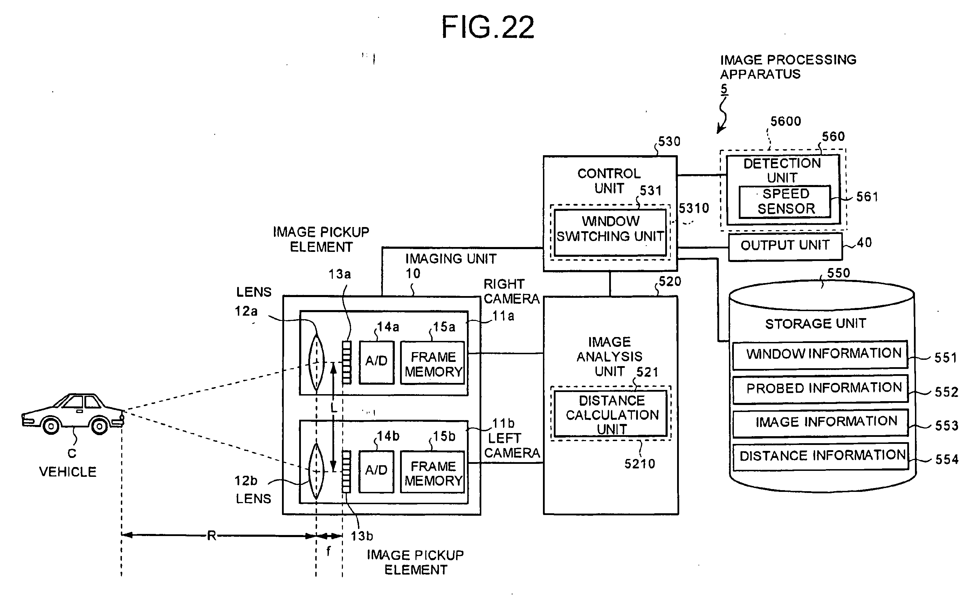

FIG. 22 is a block diagram showing a configuration of an image processing apparatus according to a fifth embodiment of the present invention. An image processing apparatus 5 includes an imaging unit 10 which picks a predetermined field of view, an image analysis unit 520 which analyzes an image generated by the imaging unit 10, a control unit 530 which performs operation control of the image processing apparatus 5, an output unit 40 which outputs information such as an image or letters to display the information, a storage unit 550 which stores various data, and a probing unit 560 which probes moving information of a given vehicle serving as a mobile object such as a four-wheel vehicle on which the image processing apparatus 5 is mounted. The same reference numerals as in the image processing apparatus 1 according to the first embodiment denote the same parts in the image processing apparatus 5.

The image analysis unit 520 includes a distance calculation unit 521 which processes the image signal group acquired from the imaging unit 10 to calculate a distance to an object the image of which is picked. The distance calculation unit 521 calculates a distance from an arbitrary image signal in an calculation range, i.e., an arbitrary pixel of an image pickup element to the object. The image analysis unit 520 forms distance information in which a distance to the object calculated by the distance calculation unit 521 is caused to correspond to a position of the object in an image and outputs the distance information to the control unit 530.

The control unit 530 includes a window switching unit 531. The window switching unit 531 has functions of a switching process unit which acquires moving information from the probing unit 560, selects a window matched with the moving information from pieces of window information stored by window information 551, and outputs designation information which switches the window set by the distance calculation unit 521 to the selected window to the image analysis unit 520 together with the window information.

The window information is information related to a size, a shape, and the like of the window.

The storage unit 550 stores the window information 551 in which pieces of window information selected by the window switching unit 531, probed information 552 probed by the probing unit 560, the image information 553 picked by the imaging unit 10, and distance information 554 calculated and formed by the distance calculation unit 521.

The probing unit 560 includes a speed sensor 561 which detects a moving speed of the given vehicle and outputs the speed information detected by the speed sensor 561 to the control unit 530 as moving information of the given vehicle. the speed sensor 561 may be a sensor which observes a road surface on which the given vehicle runs from the given vehicle to calculate a speed, a sensor which detects an acceleration to calculate a speed, or the like.

In embodiment 5, the probing unit 560 constitutes at least part of a moving information detection unit 5600 which detects the moving information including the speed of the mobile object. The window switching unit 531 constitutes at least a part of a processing content setting unit 5310 which sets contents of a process to be performed in an image based on the moving information detected by the moving information detection unit 5600. Furthermore, the distance calculation unit 521 constitutes at least a part of a processing calculation unit 5210 which performs processing calculation corresponding to the contents of the process set by the processing content setting unit 320.

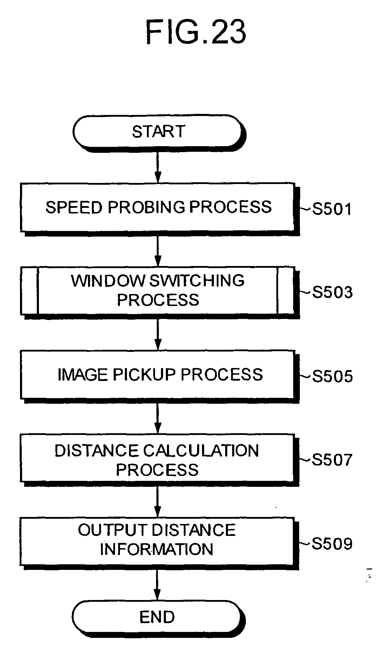

Processes executed by the image processing apparatus 5 will be described below with reference to the flow chart in FIG. 23. FIG. 23 is a flow chart showing procedures until the image processing apparatus 5 outputs distance information corresponding to a picked image.

As shown in FIG. 23, the speed sensor 561 performs a speed probing process which detects a moving speed of the given vehicle and outputs the detected speed to the control unit 530 as probing information (step S501). The window switching unit 531 performs a window switching process which selects a window matched with the probing information acquired from the probing unit 560 from the window information 551 and designates the image analysis unit 520 to switch a window to the selected window (step S503). In step S503, the window switching unit 531 outputs designation information which switches a window to the selected window is output to the image analysis unit 520 together the window information.

The imaging unit 10 performs an image pickup process which picks a predetermined field of view and outputs a generated image signal group to the image analysis unit 520 as image information (step S505). The distance calculation unit 521 performs a distance calculation process which calculates a distance to an object on the basis of the image signal group corresponding to the window designated by the window switching unit 531, forms distance information in which the calculated distance is caused to correspond to a position of the object on the image, and outputs the distance information to the control unit 530 (step S507). The control unit 530 outputs the distance information and predetermined processing information based on the distance information to an output unit 540 (step S509) to end a series of processes. The control unit 530 stores the probed information 552, the image information 553, and the distance information 554 serving as information generated in the processing steps as needed to the storage unit 550.

The series of processes are continuously repeated unless a predetermined process end or a designation for interruption is received from a passenger or the like of the given vehicle. The series of processes are sequentially executed in the above description. However, it is preferable that processes of independent processors are executed in parallel to each other to increase the speed of a processing cycle. Furthermore, a subsequent speed state may be predicted on the basis of time-series speed information stored in the probed information 552, and the speed probing process may be arbitrarily skipped to increase the speed of the processing cycle. the image pickup process in step S505 may be performed immediately before step S501 or step S503.

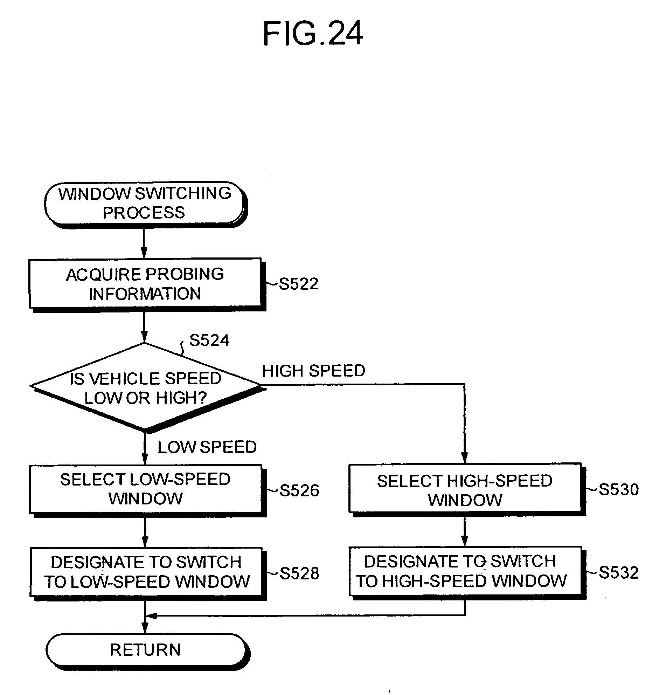

The window switching process in step S503 shown in FIG. 23 will be described below. FIG. 24 is a flow chart showing procedures of the window switching process. As shown in FIG. 24, the window switching unit 531 acquires the probing information from the probing unit 560 (step S522) and determines whether a speed of the given vehicle is low or high (step S524). When the window switching unit 531 determines that the speed is low (step S524: low speed), the window switching unit 531 selects a low-speed window from the window information 551 (step S526), outputs designation information for switching a window to the selected window to the image analysis unit 520 together with the window information (step S528), and returns the operation to step S503). On the other hand, when the window switching unit 531 determines that the speed is high (step S524: high speed), the window switching unit 531 selects a high-speed window from the window information 551 (step S530), outputs designation information for switching a window to the selected window to the image analysis unit 520 together with the window information (step S523), and returns the operation to step S503.

In the flow chart shown in FIG. 24, the windows of two types, i.e., the low-speed window or the high-speed window are selected on the basis of the speed of the given vehicle. However, a large number of speed states may be further determined to make it possible to select windows having various sizes. Windows having different sizes may be substantially designed to be selected to an arbitrary speed.

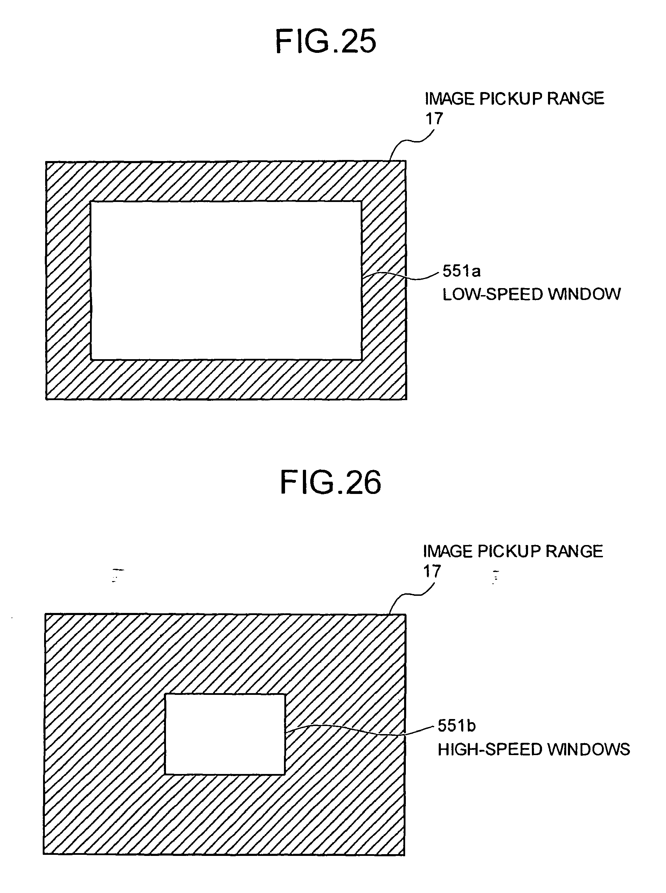

An example of a window selected by the window switching unit 531 will be described below. FIG. 25 is a diagram showing an example of the low-speed windows. A low-speed window 551a shown in FIG. 25 corresponds to an almost entire region of an image pickup range 17 corresponding to a field of image pickup view of the imaging unit 10. A low-speed window 515a captures an object located in a range having a short distance or a long distance to the given vehicle in the field of image pickup view on an image.

On the other hand, FIG. 26 is a diagram showing an example of the high-speed window. A high-speed window 551b is smaller than the low-speed window 551a and corresponds to a partial region of the center portion of the image pickup range 17. The high-speed window 551b can selectively capture an object located at a long distance from the given vehicle in the field of image pickup view on the image. As a result, long-distance image information which is important in running at a high speed can be extracted.

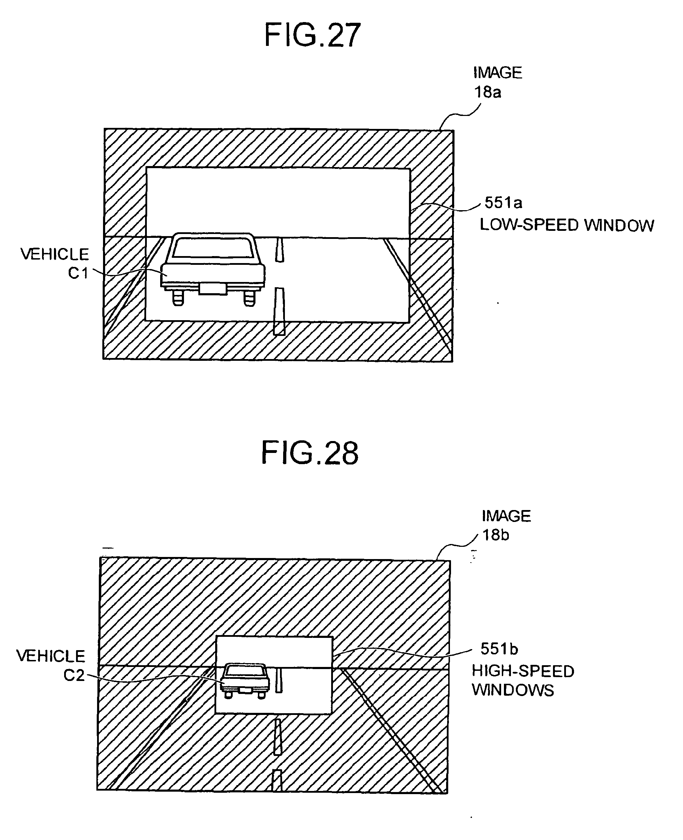

FIG. 27 is a diagram obtained by overlapping the low-speed window 551a on an image 18a. The low-speed window 551a, as shown in FIG. 27, a vehicle C1 running at a position close to the given vehicle is captured together with a background and targets the vehicle C1 for distance calculation.

On the other hand, FIG. 28 is a diagram obtained by overlapping the low-speed window 551a on an image 18b. The high-speed window 551b, as shown in FIG. 28, captures a vehicle C2 running at a position having a long distance from the given vehicle together with a background and targets the vehicle C2 for distance calculation. The images 18a and 18b are images picked by any one of the right camera 11a and the left camera 11b of the imaging unit 10.

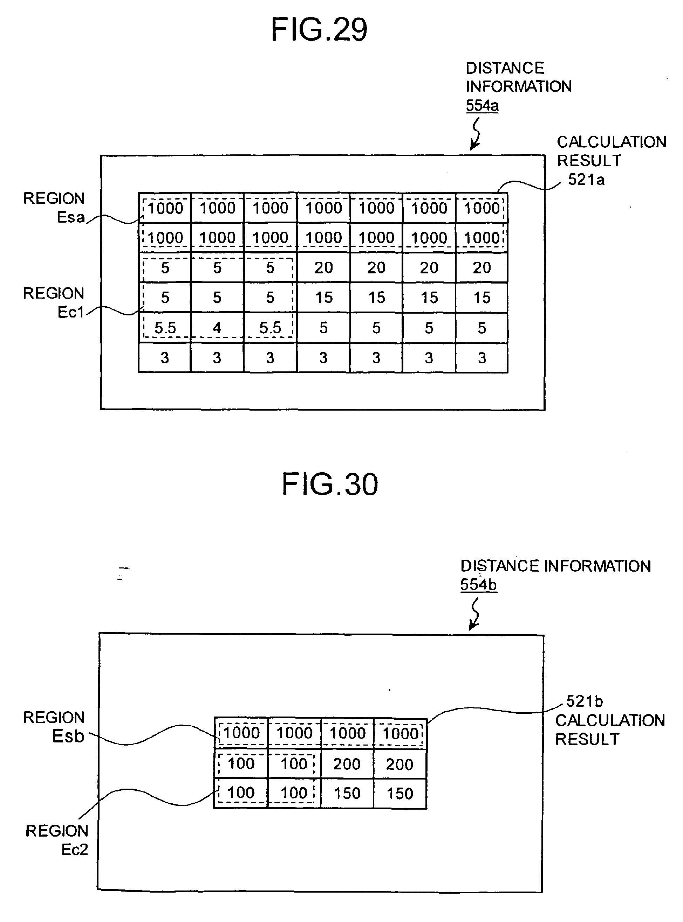

An example of distance information calculated and formed by the distance calculation unit 521 will be described below. FIG. 29 is a diagram showing distance information 554a formed by the distance calculation unit 21 on the basis of the image 18a and the low-speed window 551a shown in FIG. 27. In the distance information 554a, a calculation result 521a represents a result of distance calculation in the low-speed window 551a. The calculation result 521a, as shown in FIG. 29, is expressed as a numerical value of a result obtained such that the distance calculation unit 521 divides a region in the low-speed window 551a into a small regions arranged in a predetermined matrix and calculates an average of distances to the object of the divided small regions. In the calculation result 521a, a result included in a region Esa expresses a distance corresponding to sky which is the background 18a, and a result included in a region Ec1 expresses a distance corresponding to the vehicle C1. Results except for the results described above expresses a distance corresponding to a road surface.

On the other hand, FIG. 30 is a diagram showing a distance information 554b formed by the distance calculation unit 521 on the basis of the image 18b and the high-speed window 551b shown in FIG. 28. In the distance information 554b, a calculation result 521b expresses a result of distance calculation in the high-speed window 551b. The calculation result 521b, like the calculation result 521a, expresses an average of distances to the object calculated for the small regions. In the calculation result 521b, a result included in a region Esb corresponds to sky, a result included in a region Ec2 corresponds to the vehicle C2, and a result except for the results described above corresponds to a road surface. Numerical values expressed by the calculation results 521a and 521b are numerical values obtained by expressing distances by a predetermined unit system, for example, a numerical value expressed by the metric system.

The image processing apparatus 5 according to the fifth embodiment described above selects an image processing range on the basis of a moving speed of a given vehicle and performs distance calculation on the basis of an image signal group corresponding to the selected image processing range. For this reason, in comparison with a conventional image processing apparatus which performs distance calculation to all image signals of an image signal group, a load of a process for distance calculation can be reduced, and time required for distance calculation can be shortened. As a result, the image processing apparatus 5 can shorten processing time required until the distance information is output after an image is acquired and can output the distance information at a high speed.

In the fifth embodiment, a moving speed, a moving direction, or position information are detected as moving information of a given vehicle to select a window. However, a moving acceleration, a moving orientation, and the like may be detected to select a window. A direction or a sight line of driver's face of a given vehicle may be detected to select a window.

Sixth embodiment

A sixth embodiment of the present invention will be described below. In the fifth embodiment described above, the window switching unit 531 selects a window on the basis of a speed detected by the speed sensor 561. However, in the sixth embodiment, a moving direction of a given vehicle is detected to select a window.

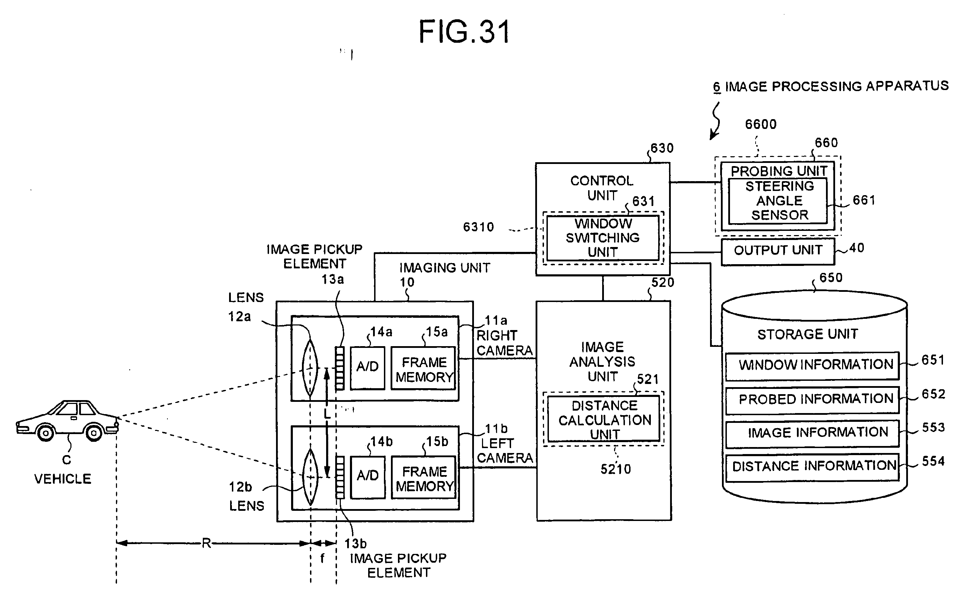

FIG. 31 is a block diagram showing a configuration of an image processing apparatus according to the sixth embodiment of the present invention. An image processing apparatus 6 shown in FIG. 31 includes a probing unit 660 (at least a part of a moving information detection unit 6600) in place of the probing unit 560 of the image processing apparatus 5 according to the fifth embodiment described above. The probing unit 660 includes a steering angle sensor 661. The image processing apparatus 6 includes a control unit 630 in place of the control unit 530. The control unit 630 includes a window switching unit 631 (at least a part of a processing content setting unit 6310). The image processing apparatus 6 includes a storage unit 650 in place of the storage unit 550. The storage unit 650 stores window information 651 in which pieces of window information selected by the window switching unit 631 are stored and probing information 652 probed by the probing unit 660, and stores the image information 553 and the distance information 554 as in the storage unit 550. The remaining configuration is the same as that in the fifth embodiment. The same reference numerals as in the fifth embodiment denote the same parts in the sixth embodiment.

The steering angle sensor 661 is a sensor which detects a steering angle serving as right and left rotating angles of front wheels as a moving direction, for example a sensor which detects a steering angle on the basis of a rotating angle and a rotating direction of a steering wheel. The probing unit 660 outputs the steering angle detected by the steering angle sensor 661 to the control unit 630 as moving information of a given vehicle. The steering angle sensor 661 may be a sensor which detects a moving direction by using a gyroscope, a sensor which detects a moving direction by a blinking state of a direction indicator, or the like.

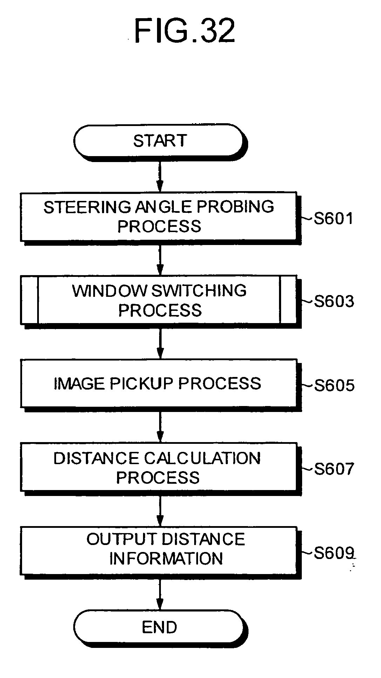

Processes executed by the image processing apparatus 6 will be described below. FIG. 32 is a flow chart showing procedures performed until the image processing apparatus 6 outputs distance information corresponding to a picked image.

As shown in FIG. 32, the steering angle sensor 661 performs a steering angle probing process which detects a steering angle of a given vehicle and outputs the detected steering angle to the control unit 630 as probing information (step S601). The window switching unit 631 performs a window switching process which selects a window matched with probing information acquired from the probing unit 660 from the window information 651 and designates the image analysis unit 520 to switch a window to the selected window (step S603). In this case, the window switching unit 631 outputs designation information for switching a window to the selected window to the image analysis unit 520 together with the window information.

Thereafter, the image processing apparatus 6, as shown in FIG. 32, executes an image pickup process (step S605), a distance calculation process (step S607), and a distance information output process (step S609) as in step S505, step S507, and step S509 shown in FIG. 23, respectively. The processes of the image processing apparatus 6 are different from the processes of the image processing apparatus 5 in that a window used in the distance calculation process in step S607 is a window corresponding to a steering angle of the given vehicle and that the steering angle detected by the steering angle sensor 661 is stored as the probing information 652.

In the image processing apparatus 6, as in the image processing apparatus 5, processes of independent processors are preferably executed in parallel to each other to increase the speed of a processing cycle. Furthermore, a subsequent state of a steering angle may be predicted on the basis of time-series steering angle information stored by the probing information 652, and the steering angle probing process may be arbitrarily skipped to increase the speed of the processing cycle. The image pickup process in step S605 may be performed immediately before step S601 or step S603.

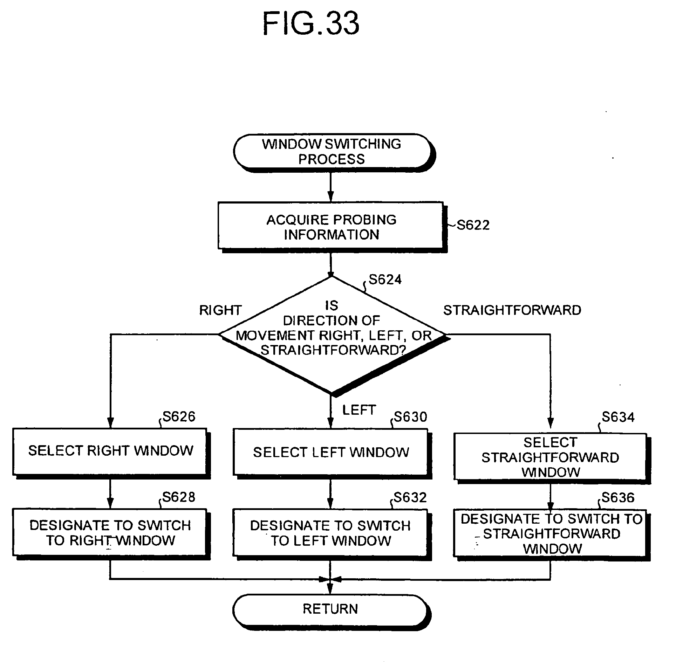

The window switching process in step S603 shown in FIG. 32 will be described below. FIG. 33 is a flow chart showing procedures of the window switching process. As shown in FIG. 33, the window switching unit 631 acquires the probing information from the probing unit 660 (step S622), and determines whether a direction of movement of the given vehicle is right, left, or straightforward (step S624). When the window switching unit 631 determines that the direction is right (step S624: right), the window switching unit 631 selects a right window from the window information 651 (step S626), outputs designation information for switching a window to the selected window to the image analysis unit 520 together with the window information (step S628), and returns the operation to step S603.

On the other hand, when the window switching unit 631 determines that the direction is left (step S624: left), the window switching unit 631 selects a left window (step S630) and outputs designation information for switching a window to the selected window to the image analysis unit 520 together with the window information (step 5632), and returns the operation to step S603. On the other hand, when the window switching unit 631 determines that the direction is straightforward (step S624: straightforward), the window switching unit 631 selects a straightforward window (step S634), and outputs designation information for switching a window to the selected window to the image analysis unit 520 together with the window information (step S636), and returns the operation to step S603).

In the flow chart shown in FIG. 33, the windows of three types, i.e., the right window, the left window, and the straightforward window are selected on the basis of a steering angle of the given vehicle. However, a large number of steering angle states may be further determined to make it possible to select windows having various positions and various sizes, or different windows may be able to be substantially selected to an arbitrary steering angle.

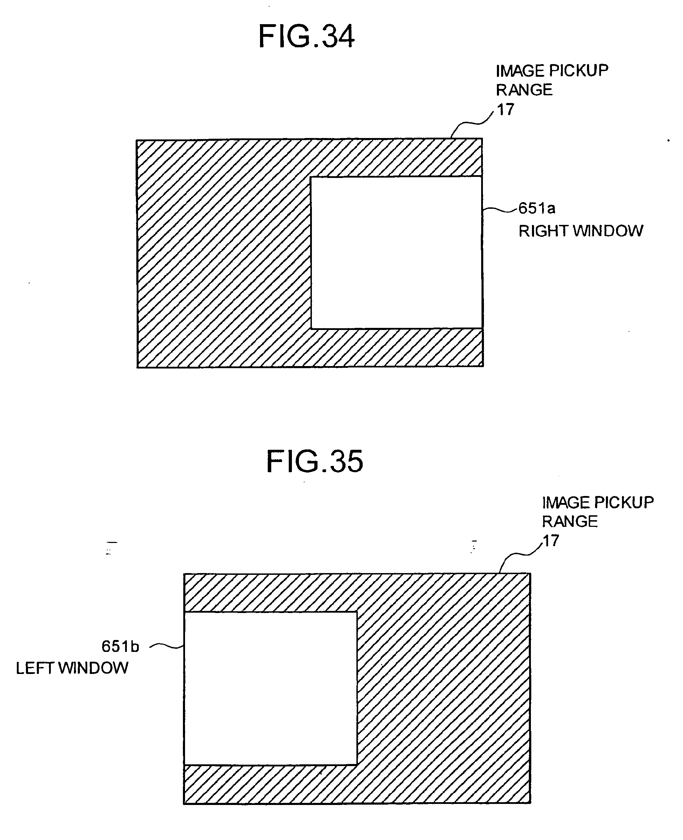

An example of a window selected by the window switching unit 631 will be described below. FIG. 34 is a diagram showing an example of the right window. A right window 651a shown in FIG. 34 corresponds to an almost entire area of the right half of the image pickup range 17. The right window 651a can selectively capture an object located on the right side in a field of image pickup view on the image. As a result, image information on a forward right side which is most important when the route is turned to the right can be extracted.

On the other hand, FIG. 35 is a diagram showing an example of a left window. A left window 651b corresponds to an almost entire area of the left half of the image pickup range 17. The left window 651b selectively captures an object located on the left side in the field of image pickup view on the image to make it possible to extract the image information on the forward left side.

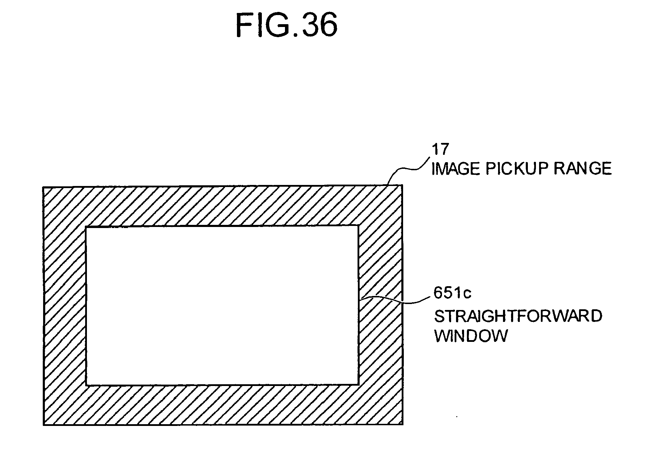

On the other hand, FIG. 36 is a diagram showing an example of the straightforward window. A straightforward window 651c corresponds to an almost entire area of the image pickup range 17. The straightforward window 651c captures an object located in an almost entire area in the field of image pickup view on the image.

The image processing apparatus 6 according to the sixth embodiment described above can select an image processing range on the basis of a steering angle of a given vehicle and perform distance calculation on the basis of an image signal group corresponding to the selected image processing range. For this reason, in comparison with a conventional image processing apparatus which performs distance calculation to all image signals of an image signal group, a load of a process for distance calculation can be reduced, and time required for distance calculation can be shortened. As a result, the image processing apparatus 6 can shorten processing time required until the distance information is output after an image is acquired and can output the distance information at a high speed.

Seventh embodiment

A seventh embodiment of the present invention will be described below. In the fifth and the sixth embodiments described above, the window switching unit selects a window on the basis of a speed or a steering angle detected by the probing unit. However, in the seventh embodiment, a position of a given vehicle is detected, map information is referred to on the basis of the detected position, and a window is selected on the basis of the referred map information.

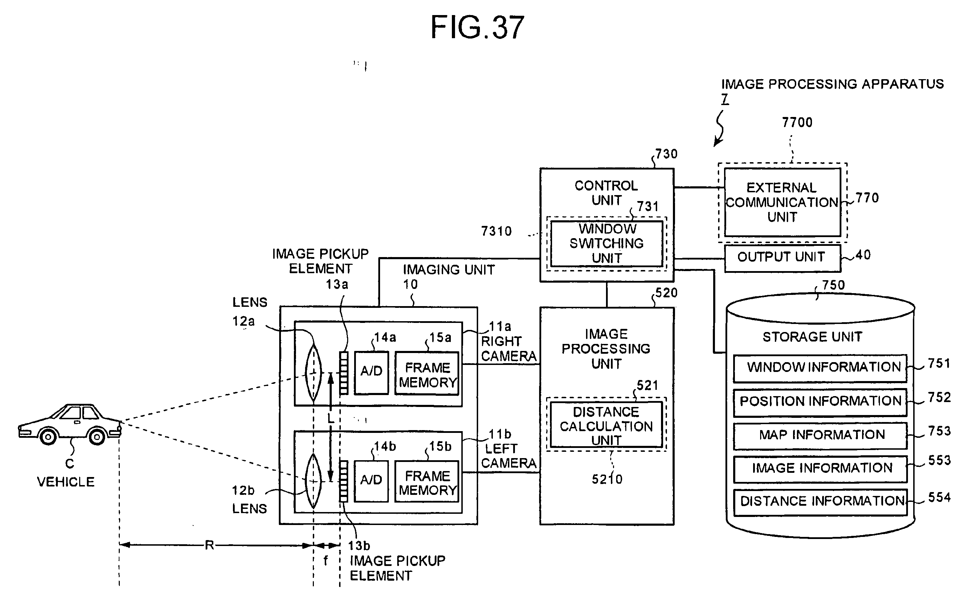

FIG. 37 is a block diagram showing a configuration of an image processing apparatus according to the seventh embodiment of the present invention. An image processing apparatus 7 shown in FIG. 37 includes an external communication unit 770 (at least a part of a moving information detection unit 7700) in place of the probing unit 560 of the image processing apparatus 5 according to the fifth embodiment described above. The image processing apparatus 7 includes a control unit 730 in place of the control unit 530. The control unit 730 includes a window switching unit 731 (at least a part of a processing content setting unit 7310). Furthermore, the image processing apparatus 7 includes a storage unit 750 in place of the storage unit 550. The storage unit 750 stores window information 751 which pieces of window information selected by the window switching unit 731, position information 752 received by the external communication unit 770, and map information 753 to which the window switching unit 731 refers to on the basis of the position information 752. As in the storage unit 550, the storage unit 750 stores the image information 553 and the distance information 554. The remaining configuration is the same as that in the fifth embodiment. The same reference numerals as in the fifth embodiment denote the same parts in the seventh embodiment.

The external communication unit 770 is a means for detecting a position of a given vehicle, for example a communication means using a GPS (Global Positioning System). The external communication unit 770 outputs a detected position to the control unit 730 as moving information of the given vehicle. The external communication unit 770 may detect the position of the given vehicle and acquire map information near the detected position. As the external communication unit 770, in place of the communication means, a sensor or the like which detects a position by applying a gyroscope or a speedometer.

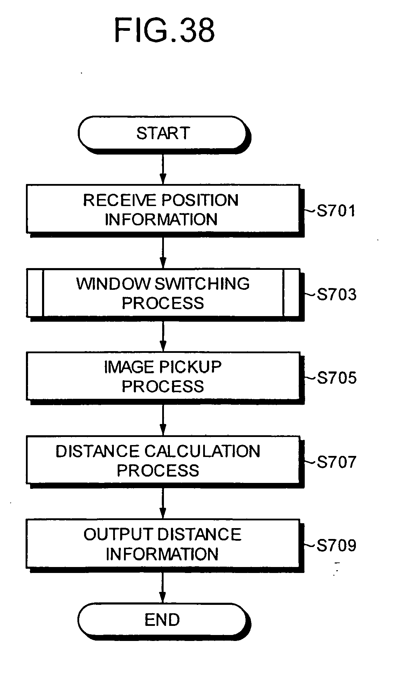

Processes executed by the image processing apparatus 7 will be described below. FIG. 38 is a flow chart showing procedures performed until the image processing apparatus 7 outputs distance information corresponding to a picked image.

As shown in FIG. 38, the external communication unit 770 performs position information reception in which position information of a given vehicle is received and output to the control unit 730 as moving information (step S701). The window switching unit 731 performs a window switching process which refers to the map information 753 on the basis of the position information acquired from the external communication unit 770, selects a window matched with the referred map information from the window information 751, and designates the image analysis unit 520 to switch a window to the selected window (step S703). In this case, the window switching unit 731 outputs designation information which switches a window to the selected window to the image analysis unit 520 together with the window information.

Thereafter, the image processing apparatus 7, as shown in FIG. 38, executes an image pickup process (step S705), a distance calculation process (step S707), and a distance information output process (step S709) as in step S505, step S507, and step S509 shown in FIG. 23, respectively. The processes of the image processing apparatus 7 are different from the processes of the image processing apparatus 5 in that a window used in the distance calculation process in step S707 is a window corresponding to position information and map information and that the position detected by the external communication unit 770 is stored as the position information 752.

In the image processing apparatus 7, as in the image processing apparatus 5, processes of independent processors are preferably executed in parallel to each other to increase the speed of a processing cycle. Furthermore, a subsequent position may be predicted on the basis of time-series position information or the like stored by the position information 752, and the steering angle probing process may be arbitrarily skipped to increase the speed of the processing cycle. The image pickup process in step S705 may be performed immediately before step S701 or step S703.

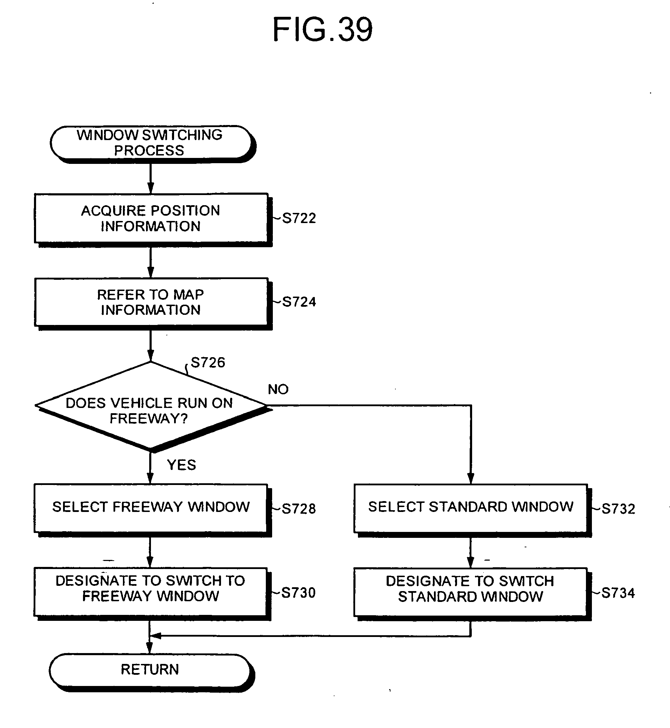

An example of the window switching process in step S703 shown in FIG. 38 will be described below. FIG. 39 is a flow chart showing an example of procedures of the window switching process. As shown in FIG. 39, the window switching unit 731 acquires the position information from the external communication unit 770 (step S722), refers to the map information 753 on the basis of the acquired position information (step S724), and determines whether the given vehicle runs on a freeway (step S726).

The window switching unit 731 selects a freeway window from the window information 751 (step S728) when the window switching unit 731 determines that the given vehicle runs on the freeway (step S726: Yes), outputs designation information which switches a window to the selected window to the image analysis unit 520 together with the window information (step S730), and returns the operation to step S703.

On the other hand, when the window switching unit 731 determines that the given vehicle does not runs on the freeway (step S726: No), the window switching unit 731 selects a standard window (step S732, outputs designation information which switches a window to the selected window to the image analysis unit 520 together with the window information (step S734), and returns the operation to step S703.

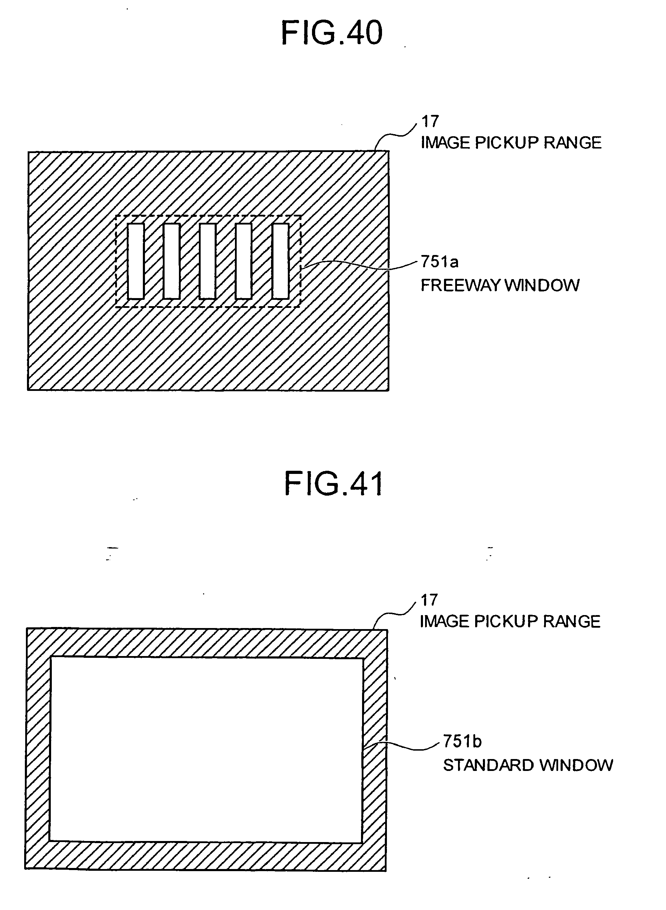

An example of the window selected by the window switching unit 731 will be described below. FIG. 40 is a diagram showing an example of a freeway window. A freeway window 751a shown in FIG. 40 is a window constituted by a plurality of small windows arranged at a center portion of the image pickup range 17. The freeway window 751a can selectively capture an object located at a center portion of a field of image pickup view on an image, and can further extracts image information from the image information in the captured range at a predetermined rate. As a result, the freeway window 751a can extract image information on a road which is important when a vehicle runs on a freeway with an appropriate image resolution.

On the other hand, FIG. 41 is a diagram showing an example of the standard window. A standard window 751b corresponds to an almost entire region of the image pickup range 17. The standard window 751b captures an object which is not only on a road but also in the almost entire region in the field of image pickup view on an image.

The various patterns of the freeway window can be set. For example, as a slit pattern of the freeway window 751a shown in FIG. 40, a slit pattern including a large number of slits each having a further narrow width may be used, or a dot pattern obtained by arranging a plurality of small square windows at random may be used. Other various patterns can be applied. The shape of the dot of the dot pattern is not limited to a square but also an arbitrary polygon, a circle, or an ellipse.

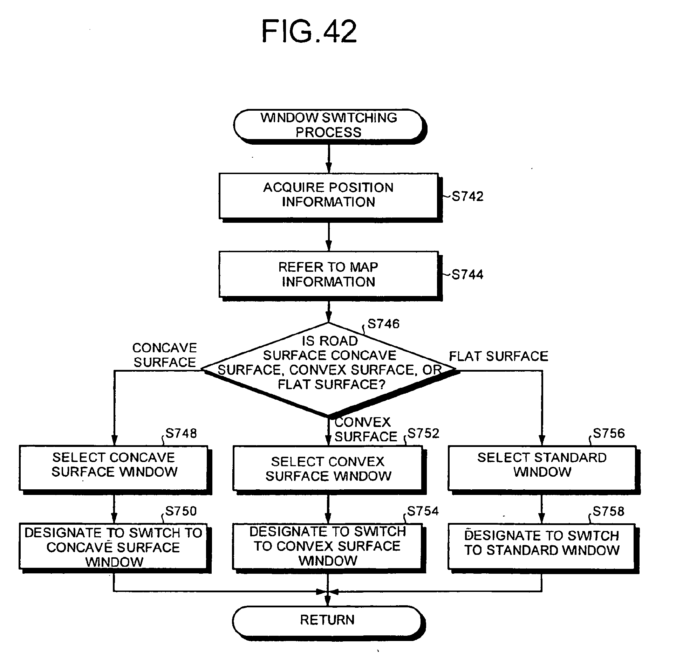

Another example of the window switching process in step S703 shown in FIG. 38 will be described below. FIG. 42 is a flow chart showing procedures of the window switching process including a process of selecting a window on the basis of an inclination of a road surface gradient of a road on which a vehicle runs. As shown in FIG. 42, the window switching unit 731 acquires position information from the external communication unit 770 (step S742), refers to the map information 753 on the basis of the acquired position information (step S744), and determines whether a road surface on which the given vehicle runs is a convex surface, concave surface, or a flat surface (step S746).

When the window switching unit 731 determines that the road surface on which the given vehicle runs is a concave surface (step S746: concave surface), the window switching unit 731 selects a concave surface window from a window information 351 (step S748), outputs designation information which switches a window to the selected window to the image analysis unit 520 together with the window information (step S750), and returns the operation to step S703. On the other hand, when the window switching unit 731 determines that the road surface is a convex surface (step S746: convex surface), the window switching unit 731 selects a convex surface window (step S752), outputs designation information which switches a window to the selected window to the image analysis unit 520 together with the window information (step S754), and returns the operation to step S703.

On the other hand, the window switching unit 731 determines that the road surface is a flat surface (step S746: flat surface), the window switching unit 731 selects a standard window (step S756), outputs designation information which switches a window to the selected window to the image analysis unit 520 together with the window information (step S758), and returns the operation to step S703.

The concave road surface means that a road surface gradient tends to increase at an elevation angle direction. For example, a road surface where a flat road surface changes into an ascending slope or a road surface where a descending slope changes into a flat road surface is applied. On the other hand, the convex road surface means that a road surface gradient tends to increase at a depression angle direction. For example, as the convex road surface, a road surface where a flat road surface changes into a descending slope or a road surface where an ascending slope changes into a flat road surface is applied.

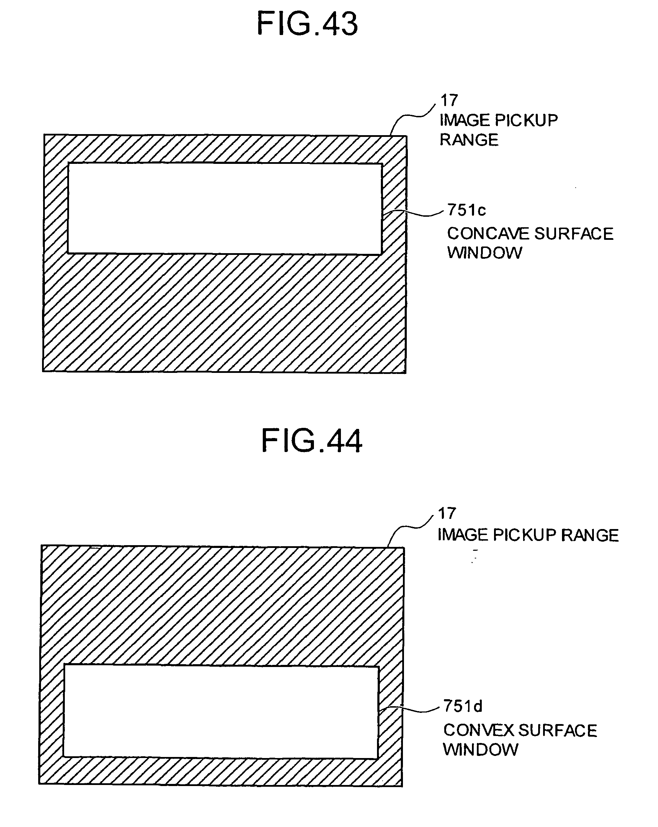

An example of a window selected by the window switching unit 731 on the basis of an inclination of a road surface gradient will be described below. FIG. 43 is a diagram showing an example of the concave surface window. The concave surface window 751c shown in FIG. 43 corresponds to an almost entire area of the upper half of the image pickup range 17. The concave surface window 751c can selectively capture an object located on the upper side in a field of image pickup view on the image. As a result, image information on a forward upper side which is important when the vehicle runs on a road surface having a concave surface can be extracted.

On the other hand, FIG. 44 is a diagram showing an example of a convex surface window. A convex surface window 751d shown in FIG. 44 corresponds to an almost entire area of the lower half of the image pickup range 17. The convex surface window 751d selectively captures an object located on the lower side in the field of image pickup view on the image to make it possible to extract image information on the forward lower side. The standard window selected when the road surface is flat surface is the same as the standard window 751b shown in FIG. 41.

In the flow charts shown in FIGS. 39 and 42, a window is selected as map information on the basis of a type of a road on which a given vehicle runs or an inclination of a road surface gradient. For example, various windows may be selected on the basis of various pieces of map information such that information representing whether a road or a lane on which a vehicle runs is large or small, information representing whether a present position is in a tunnel or the like, and information representing whether a present position is in an urban area.

The image processing apparatus 7 according to the seventh embodiment described above selects an image processing range on the basis of position information of the given vehicle and map information which is referred to on the basis of the position information, and distance calculation is performed on an image signal group corresponding to the selected image processing range. For this reason, in comparison with a conventional image processing apparatus which performs distance calculation to all image signals of an image signal group, a load of a process for distance calculation can be reduced, and time required for distance calculation can be shortened. As a result, the image processing apparatus 7 can shorten processing time required until the distance information is output after an image is acquired and can output the distance information at a high speed.

Eighth embodiment

An eighth embodiment of the present invention will be described below. An image processing apparatus according to the eighth embodiment includes all the speed sensor 561, the steering angle sensor 661, and the external communication unit 770 which are included in the image processing apparatuses 5, 6, and 7 according to the fifth to the seventh embodiments described above, multilaterally detects moving information of the given vehicle, and selects a window matched with the detected moving information.

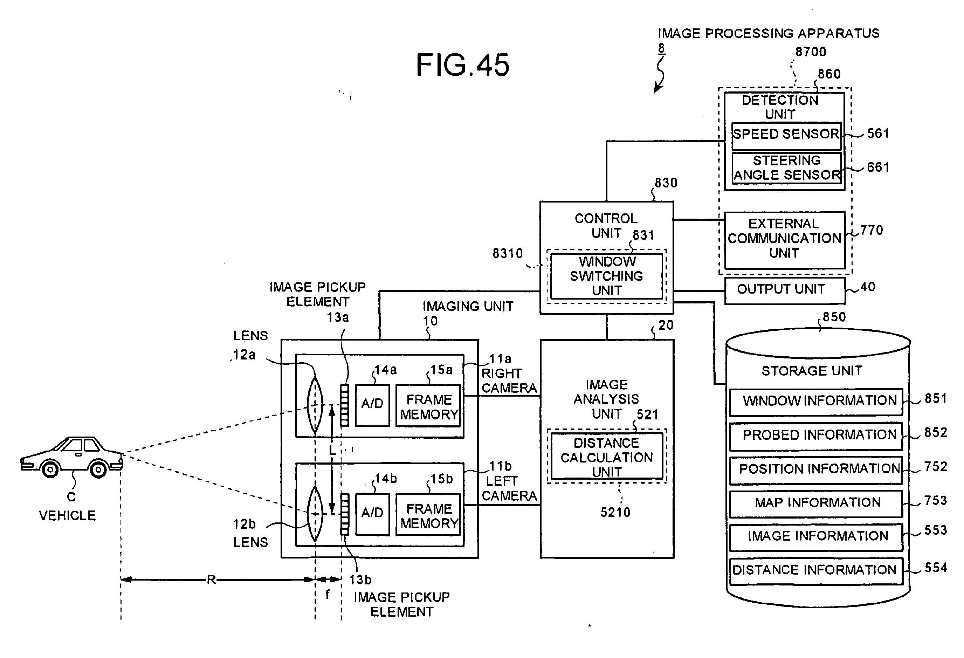

FIG. 45 is a block diagram showing a configuration of the image processing apparatus according to the eighth embodiment of the present invention. An image processing apparatus 8 shown in FIG. 45 further includes a probing unit 860 in the image processing apparatus 7 according to the seventh embodiment described above. The probing unit 860 includes a speed sensor 561 and a steering angle sensor 661. The image processing apparatus 8 includes a control unit 830 in place of the control unit 730. The control unit 830 includes a window switching unit 831 (at least a part of a processing content setting unit 8310). Furthermore, the image processing apparatus 8 includes a storage unit 850 in place of the storage unit 750. The storage unit 850 stores window information 851 in which pieces of window information selected by the window switching unit 831 are stored and probing information 852 probed by the probing unit 860, and stores, as in the storage unit 750, the image information 553, the distance information 554, the position information 752, and the map information 753. The remaining configuration is the same as that in the seventh embodiment. The same reference numerals as in the seventh embodiment denote the same parts in the eighth embodiment.

In the image processing apparatus 8, the window switching unit 831 independently or totally determines a speed detected by the speed sensor 561, a steering angle detected by the steering angle sensor 661, and map information based on position information received by the external communication unit 770, selects a window matched with the determination result from the window information 851, and outputs designation information which switches a window to the selected window to the image analysis unit 520 together with the window information. In this sense, in the eighth embodiment, the probing unit 860 and the external communication unit 770 constitute at least a part of a moving information detection unit 8700 as a whole.

Thereafter, the distance calculation unit 521, as in the fifth to the seventh embodiments described above, calculates a distance to an object on the basis of an image signal group corresponding to the selected window, forms distance information, and outputs the distance information. The window switching unit 831 may recognize at least one available combination of various pieces of moving information acquired from the probing unit 860 or the external communication unit 770 as a mode and determine a state of the given vehicle with respect to a mode designated by a passenger or the like of the given vehicle. The window switching unit 831 may predict a subsequent state of the given vehicle on the basis of time-series moving information stored by the probing information 852 and the position information 752.

The image processing apparatus 8 according to the eighth embodiment described above selects an image processing range on the basis of a result obtained by independently or totally determining various pieces of moving information of the given vehicle, and performs distance calculation on the basis of the image signal group corresponding to the selected image processing range. For this reason, in comparison with a conventional image processing apparatus which performs distance calculation to all image signals of an image signal group, a load of a process for distance calculation can be reduced, and time required for distance calculation can be shortened. As a result, the image processing apparatus 8 can shorten processing time required until the distance information is output after an image is acquired and can output the distance information at a high speed.

Ninth embodiment

A ninth embodiment of the present invention will be described below. In the fifth to the eighth embodiments, a distance to an object the image of which is picked is detected by processing an image signal group from the imaging unit 10. However, in the fifth embodiment, a distance to an object located in the field of image pickup view is detected by a radar.

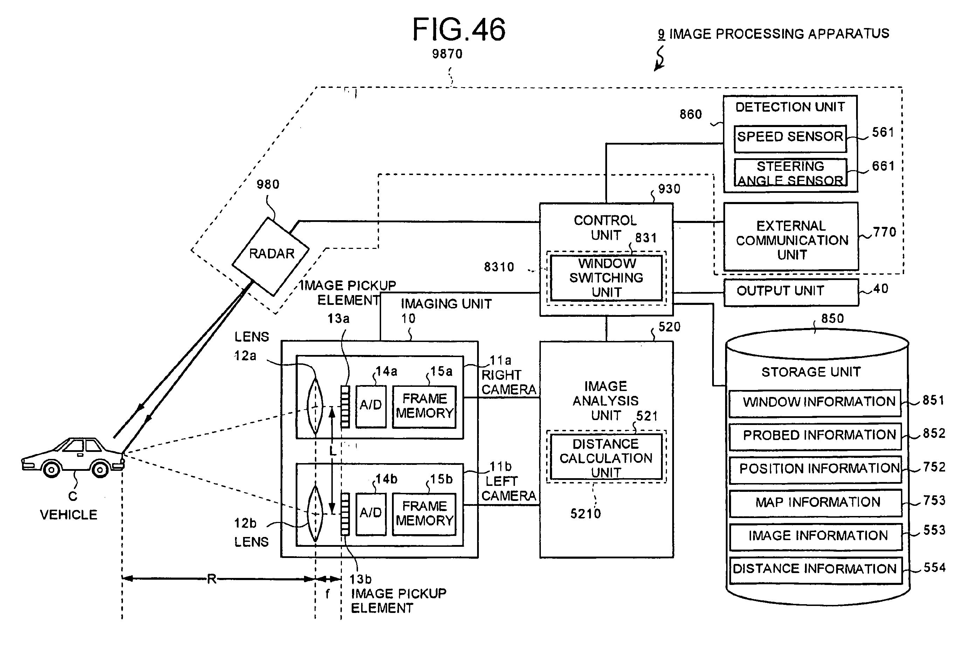

FIG. 46 is a block diagram showing a configuration of an image processing apparatus according to the ninth embodiment of the present invention. An image processing apparatus 9 shown in FIG. 46 includes in addition to the image processing apparatus 8 according to the eighth embodiment described above, a radar 980 and a control unit 930 having a function of controlling the radar 980 in place of the control unit 830. The remaining configuration is the same as that in the eighth embodiment. The same reference numerals as in the eighth embodiment denote the same parts in the ninth embodiment. In the ninth embodiment, the external communication unit 770, the probing unit 860, and the radar 980 constitute a part of a moving information detection unit 9870 as a whole.

The radar 980 transmits a predetermined outgoing wave, receives a reflected wave obtained by reflecting the outgoing wave by an object surface, and detects a receiving state and a distance from the radar 980 to the object which reflects the outgoing wave and a direction in which the object is located on the basis of the receiving state. The radar 980 detects the distance and the direction of the object which reflects the outgoing wave on the basis of an outgoing angle of the outgoing wave, an incident angle of the reflected wave, a receiving intensity of the reflected wave, time from when the outgoing wave is emitted to when the reflected wave is received, and a change in frequency in the outgoing wave and the reflected wave. The radar 980 outputs a distance to an object located in a field of image pickup view of the imaging unit 10 to the control unit 930 together with the direction in which the object is located. The radar 980 transmits, for example, a laser beam, an infrared ray, a millimeter wave, a microwave, an ultrasonic wave, or the like as a transmitter wave.

In the image processing apparatus 9 according to the ninth embodiment, a distance is detected by the radar 980 in place of calculation of a distance by processing image information obtained from the imaging unit 10. For this reason, distance information can be acquired at a higher speed and a higher accuracy.

In the image processing apparatus 9, matching between a positional relationship in the image signal group picked by the imaging unit 10 and a positional relationship in the detection range of the radar 980 is obtained as follows, and then the processes are performed. For example, the image processing apparatus 9 performs an image pickup process by the imaging unit 10 and a detection process by the radar 980 to an object having a known shape. A position of the known object processed by the imaging unit 10 and the radar 980 is obtained. Thereafter, the image processing apparatus 9 obtains a relationship between positions of the known object processed by the imaging unit 10 and the radar 980 by using the method of least squares and matches the positional relationship in the image signal group picked by the imaging unit 10 with the positional relationship in the detection range of the radar 980.

In the image processing apparatus 9, even though an image pickup original point of the imaging unit 10 and a detection original point of the radar 980 are different from each other, if distances from the image pickup point and the detection point to the image processing apparatus 9 are sufficiently long, it can be understood that an image pickup original point and a detection original point are almost overlapped. Furthermore, when matching between the positional relationship in the image signal group picked by the imaging unit 10 and the positional relationship in the detection range of the radar 980 is accurately performed, the difference between the image pickup original point and the detection original point can be corrected by geometric conversion.

In the image processing apparatus 9, radar detection points of the radar 980 are preferably set to be located at predetermined intervals in a pixel row in which image signals of the image signal group picked by the imaging unit 10. When the radar detection points are not set as described above, interpolation points of the radar detection points are obtained in the same pixel row as the row of the image signals by using primary interpolation or the like on the basis of a plurality of radar detection points located near the image signals, and a detection process may be performed by the interpolation points.

Tenth embodiment

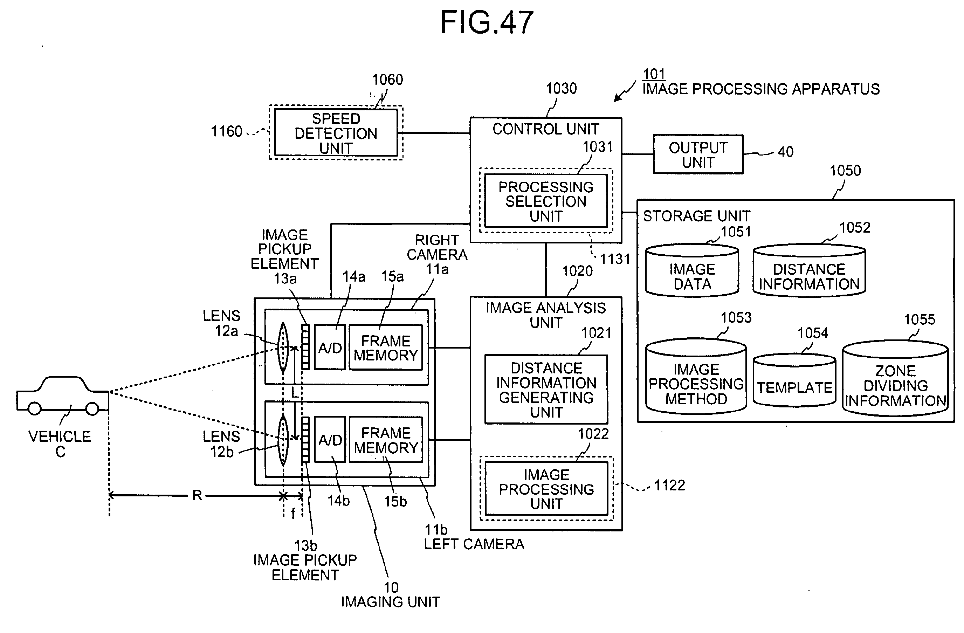

FIG. 47 is a block diagram showing a configuration of an image processing apparatus according to a tenth embodiment of the present invention. An image processing apparatus 101 shown in FIG. 47 is mounted on a mobile object, in particular, a vehicle such as a four-wheel automobile, and is constituted by an imaging unit 10 which picks a predetermined field of view, an image analysis unit 1020 which analyzes an image generated by the imaging unit 10, a control unit 1030 which performs operation control of the image processing apparatus 101, an output unit 40 which outputs information such as an image or letters on a display, a storage unit 1050 which stores various data, a speed sensor, and the like. The image processing apparatus 101 includes a speed detection unit 1060 which detects a speed of a given vehicle.

The image analysis unit 1020 has a distance information generating unit 1021 which calculates a distance to an object the image of which is to be picked and which is included in a region of a field of view the image of which is picked by the imaging unit 10 and an image processing unit 1022 which performs image processing corresponding to the distance information and a speed of a given vehicle detected by the speed detection unit 1060.

As is apparent from this explanation, the distance information generating unit 1021 has a function of a distance calculation unit.

The control unit 1030 has a processing selection unit 1031 which selects an image processing method actually performed by the image processing unit 1022 from a plurality of image processing methods.

The storage unit 1050 stores and memorizes image data 1051 picked by the imaging unit 10, distance information 1052 of constituent points (pixel points) of the image data 1051, an image processing method 1053 to be selected by the processing selection unit 1031, a template 1054 which expresses patterns of various objects (vehicle, person, road surface, white line, indicator, and the like) used in object recognition in an image in units of pixel points, and zone dividing information 1055 obtained by dividing a range of an available speed of a running vehicle and a range of distance in which image pickup can be performed by the imaging unit 10 into pluralities of zones, respectively.

In the tenth embodiment, the speed detection unit 1060 constitutes at least a part of a moving information detection unit 1160 which detects moving information including a speed of a mobile object. The processing selection unit 1031 constitutes at least a part of a processing content setting unit 1131 which sets contents of processing to be performed in an image based on moving information detected by the moving information detection unit 1160. Furthermore, the image processing unit 1022 constitutes at least a part of a processing calculation unit 1122 which performs processing calculation corresponding to the contents of the processing set by the processing content setting unit 1131.

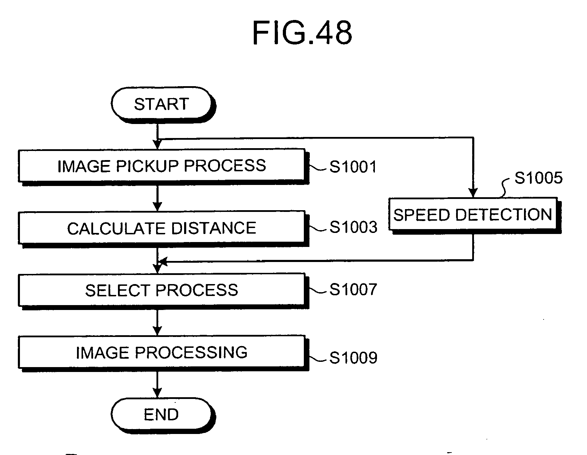

An image processing method executed by the image processing apparatus 101 having the above configuration will be described below in detail with reference to a flow chart shown in FIG. 48. The imaging unit 10 performs an image pickup process which picks a predetermined field of view to generate an image (step S1001).

Thereafter, the distance information generating unit 1021 calculates a distance to an object the image of which is to be picked and which is included in the image of which is picked by each image of pixel points (step S1003). The distance information generating unit 1021 calculates coordinates of all pixel points or some pixel points in the field of view picked by using right and left camera coordinate systems. Subsequently, the distance information generating unit 1021 calculates a distance R from the forehead surface of the vehicle to a point the image is picked by using the calculated coordinates (x, y, z) of the pixel points. In this case, a position of the forehead surface of the vehicle in the camera coordinate system must be predicted in advance. Thereafter, the distance information generating unit 1021 stores the calculated coordinates (x, y, z) of all the pixel points or some pixel points and the distance R in the storage unit 1050.

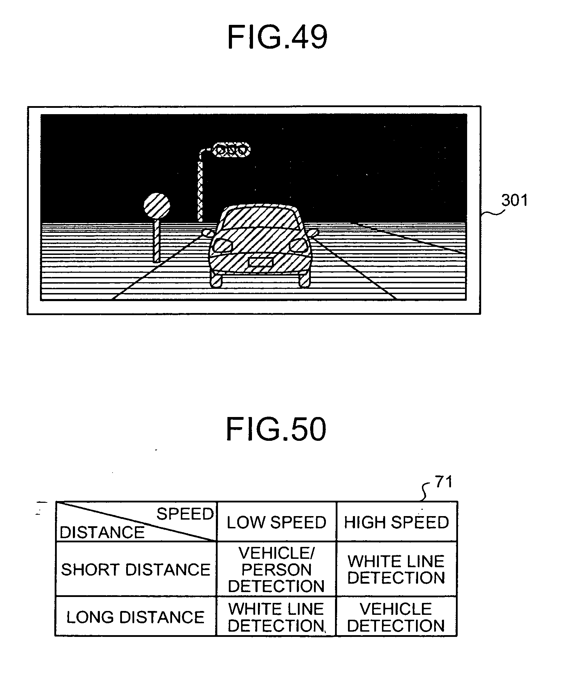

The distance information including the distance calculated in step S1003 may be superposed on the image generated in step S1001 to generate a distance image. FIG. 49 is a diagram showing a display output example of the distance image in the output unit 40. A distance image 301 shown in FIG. 49 expresses a distance from the imaging unit 10 in a grayscale. A portion corresponding to a distant place is displayed with a higher density.

In parallel to the processes (step S1001 and S1003) in the imaging unit 10 and the distance information generating unit 1021, the speed detection unit 1060 detects a speed of a given vehicle (step S1005).

The processing selection unit 1031 in the control unit 1030, on the basis of the distance calculation result in step S1003 and the speed detection result in step S1005, selects an image processing method executed to the points in the image by the image processing unit 1022 depending the distance calculated in step S1003 from the image processing methods 1053 stored in the storage unit 1050 (step S1007). Thereafter, the image processing unit 1022 performs image processing according to the image processing method selected by the processing selection unit 1031 (step S1009). At this time, the image processing unit 1022 reads the image processing method selected by the processing selection unit 1031 from the storage unit 1050, and performs the image processing based on the read image processing method.

FIG. 50 is a diagram showing an example of the image processing method selected by the processing selection unit 1031. In a corresponding table 71 shown in FIG. 50, each of a distance to a region to be processed and a speed of a given vehicle is divided into two zones, and an image processing method to be selected depending on combinations of zones to which the distance and the speed belong. In this selection, the processing selection unit 1031 determines zones to which a calculated distance and a detected speed belong with reference to the zone dividing information 1055 stored in the storage unit 1050, and collates the determination result with the image processing method 1053 in the storage unit 1050. A control signal related to the image processing method to be performed by the image processing unit 1022 is transmitted to the image processing unit 1022.

Processing contents shown in FIG. 50 will be concretely described below. In the tenth embodiment, a predetermined object is recognized in each zone. In recognition of the object, patterns (vehicle, person, road surface, white line, indicator, and the like) stored in the template 1054 of the storage unit 1050 with a pattern picked by the imaging unit 10 in an image to examine correlations between the patterns (template matching).

When a corresponding pattern is detected as a result of the template matching, processing depending on the detected object is performed. Therefore, the image processing unit 1022 has a function of an object detection unit which detects an object.

When the processing region belongs to a long-distance zone, and when a vehicle moves at a speed belonging to a high-speed zone, vehicle detection is performed to the processing region. In the vehicle detection performed here, when a brake must be applied when a preceding vehicle comes close to the given vehicle by a predetermined distance, image processing is performed such that a driver is notified that the brake must be applied. For this reason, when a pattern of the vehicle corresponding to a size obtained when the preceding vehicle comes close to the given vehicle by the predetermined distance is stored in the template 1054, the vehicle is not detected when the preceding vehicle runs ahead of the pattern.

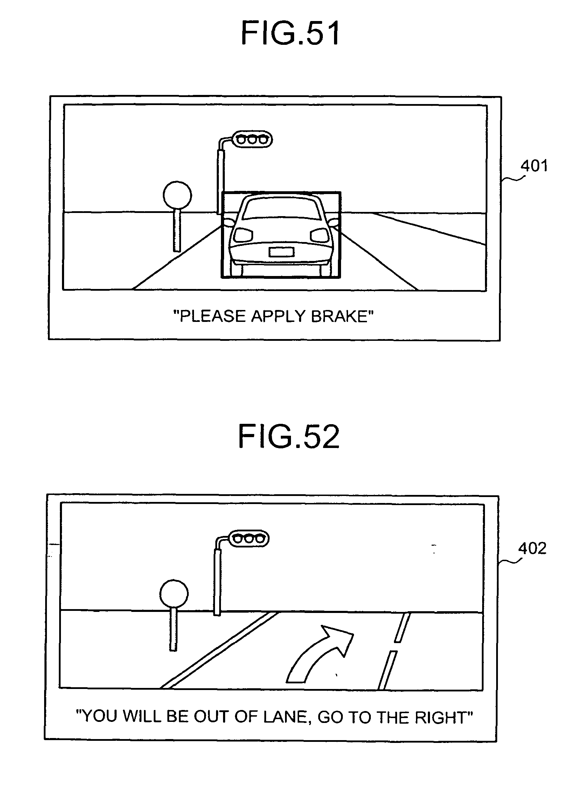

FIG. 51 is a diagram showing a display example of an image output from the output unit 40 when the vehicle is detected. In a display image 401 shown in FIG. 51, since a preceding vehicle is detected, a message representing "Please apply brake" is output. In accordance with the display contents, the same contents at those displayed by letters may be output as voice, or an appropriate warning sound may be made to call attention to a vehicle operator.

A case in which the processing region belongs to a short-distance zone and a vehicle moves at a speed belonging to a high-speed zone will be described below. In this case, white line detection is performed to the corresponding processing region. On the other hand, when the processing region belongs to a long-distance zone, and when the vehicle moves at a speed belonging to a low-speed zone, white line detection is performed to the processing region. As concrete image processing for the while line detection, for example, when a white line is detected, and when a pattern of the detected white line is different from that in a normal running state, the driver may be notified that the pattern is different from that in the normal running state. In this case, a lane dividing belt (yellow line or the like) except for the white line may be detected.

FIG. 52 is a diagram showing an example of a display image output by the output unit 40 in this case. In a display image 402 shown in FIG. 52, the image processing unit 1022 determines that a direction or a pattern of a detected white line is normal with respect to a running direction of a given vehicle, notifies a driver that the direction or the pattern is not normal, a measure ("you will be out of lane, go to the right") to be made by a vehicle operator. In this case, the same contents at those displayed by letters may be output as voice, or an appropriate warning sound may be output.

When the processing region belongs to the long-distance zone, and when a vehicle moves at a speed belonging to a low-speed zone, detection of a vehicle or a person is performed to the processing region. At the same time, an obstacle may be detected. When the obstacle is detected, a message representing "Please avoid obstacle" or the like may be output.

The image processing method described above is only an example. Another image processing method may be selected by the processing selection unit 1031. For example, in FIGS. 51 and 52, the case in which only one image processing is performed in an image is explained. However, a combination of pixel points belonging to the same distance zone in the image can be set as one closed region, and image processing can be performed to each of set closed regions. In this case, the image analysis unit 1020 achieves a function of a closed region setting unit.

According to the tenth embodiment of the present invention described above, an image processing method depending on a distance to an object the image of which is to be picked and which is generated by a picked image and a speed of a given vehicle serving as a mobile object, and the selected image processing method is applied, so that various pieces of information included in the image to be picked can be multilaterally and efficiently processed.

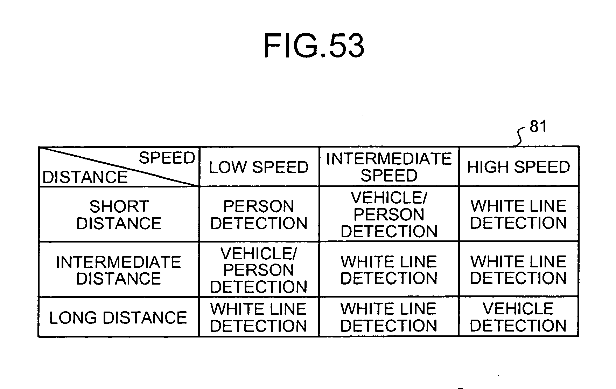

In the tenth embodiment, a combination of a speed zone and a distance region is not limited to the combination described above. FIG. 53 is an explanatory diagram showing a case in which each of the speed zone and the distance zone is divided into three zones, and a process to be executed is set depending on 9 combinations constituted by the divided zones. In a corresponding table 81 shown in FIG. 53, when a distance to the processing region belongs to the short-distance zone, and when a speed belongs to the low-speed zone, a person is detected. When a combination of the distance zone and the speed zone is (intermediate distance and low speed) or (short distance and intermediate speed), detection for a vehicle or a person is performed. When the combination of the distance zone and the speed zone is (long distance and high speed), detection for a vehicle is performed. More specifically, when (long distance and low speed), (long distance and intermediate speed), (intermediate distance and intermediate speed), (intermediate distance and high speed), or (short distance and high speed), detection for a white line is performed. In this manner, the speed zone and the distance zone may be further divided into small zones, and image processing may be performed depending on combinations of the small zones.

The distance zone is divided on the basis of a braking distance at that time, and an image processing method can also be determined on the basis of the divided distance zone. In this case, for example, the short-distance zone falls within a braking distance at that time, the middle-distance zone is equal to or larger than a braking distance at that time and equal to or smaller than two times the braking distance, and the long-distance zone is equal to or larger than two times the braking distance at that time. "Obstacle + white line" are detected in the short-distance zone, "Person + vehicle + obstacle + white line" are detected in the intermediate-distance zone, and "white line" is detected in the long-distance zone.

Furthermore, in addition to indexes of a distance and a speed, personal information of a vehicle driver, for example, a driving experience, an age, a sex, an operation experience of a vehicle which is being operated, and the like are input in advance. When divisions of the zones are changed depending on the pieces of personal information, image processing can be more exactly performed depending on conditions of a vehicle operator.

A selection method changing unit which changes a selection method for image processing methods in the processing selection unit can also further arranged in the image processing apparatus according to the tenth embodiment. In this manner, an optimum image processing method can be selected and executed depending on various conditions in traveling state of the vehicle.

Even in the tenth embodiment, in addition to various cameras, a distance measuring apparatus such as a radar can also be used. In this manner, a radar measurement value having an accuracy higher than that of a normal camera can be used, and a resolving power of distance measurement points can be further improved.

As a method of image recognition in the tenth embodiment, in addition to the template matching described above, an object recognition method which is popularly used such as a region dividing method by edge extraction and a statistic pattern recognition method based on cluster analysis can be applied.

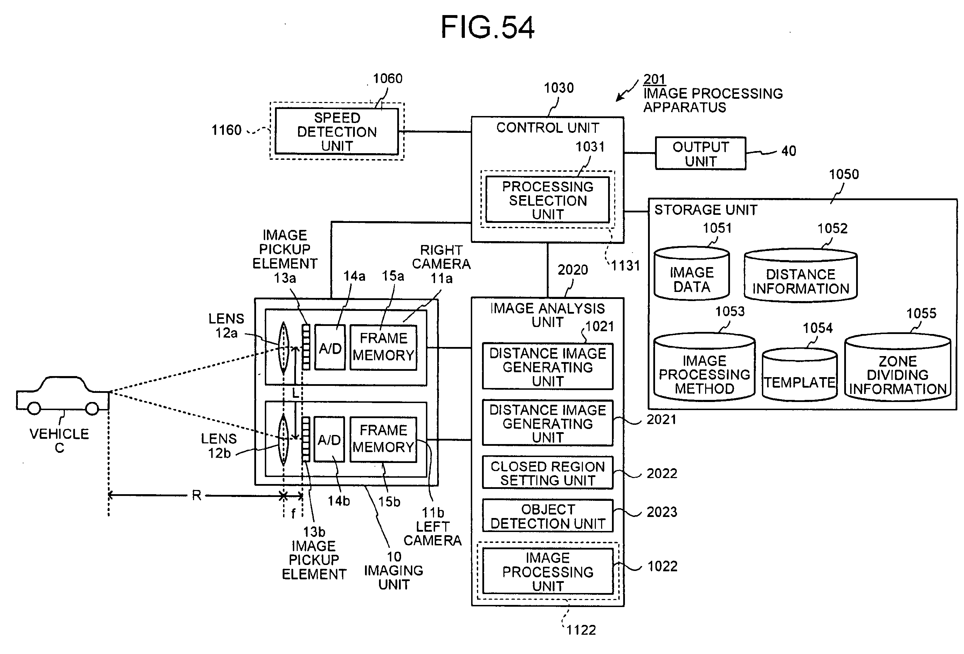

FIG. 54 is a block diagram showing a configuration of an image processing apparatus 201 according to a modification of the tenth embodiment. The image processing apparatus 201 shown in FIG. 54 includes, as an image analysis unit 2020, in addition to the distance information generating unit 1021 and the image processing unit 1022, a distance image generating unit 2021 which generates a distance image, a closed region setting unit 2022 which sets different closed regions to a plurality of distance zones, respectively, and an object detection unit 2023 which detects a predetermined object for each of the closed regions set by the closed region setting unit 2022. According to the image processing apparatus 201 having the above configuration, the same processes as those in the image processing apparatus 101 can be realized for the plurality of closed regions.

Eleventh embodiment

An eleventh embodiment of the present invention will be described below. In the first to the tenth embodiments described above, a stereo image is picked by two cameras, i.e., the right camera 11a and the left camera 11b. However, in the eleventh embodiment, a stereo image is picked by an image pickup element which has one pair of waveguide optical systems and image pickup regions corresponding to the waveguide optical systems and converts optical signals guided by the waveguide optical systems into electric signals in the image pickup regions, respectively.

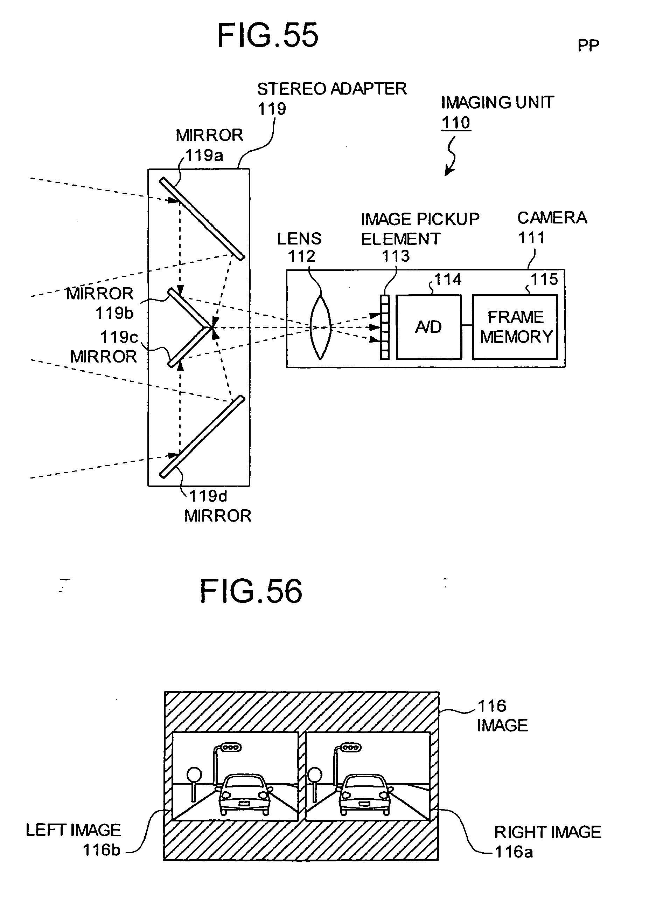

FIG. 55 is a block diagram showing a partial configuration of an image processing apparatus according to the eleventh embodiment of the present invention. An imaging unit 110 shown in FIG. 55 is an imaging unit which is arranged in the image processing apparatus according to the eleventh embodiment in place of the imaging unit 10 in the image processing apparatus 1 or the like described above. The configuration of the image processing apparatus except for that shown in FIG. 55 is the same as that described in any one of the first to the tenth embodiments.

The imaging unit 110 includes a camera 111 serving as an image pickup apparatus having the same configuration and the same functions as those of the right camera 11a and the left camera 11b of the imaging unit 10. The camera 111 includes a lens 112, an image pickup element 113, an A/D conversion unit 114, and a frame memory 115. Furthermore, the imaging unit 110 includes a stereo adapter 119 serving as one pair of waveguide optical systems constituted by mirrors 119a to 119d in front of the camera 111. The stereo adapter 119, as shown in FIG. 55, includes the mirrors 119a and 119b as a pair such that reflecting surfaces of the mirrors almost horizontally face each other, and includes the mirrors 119c and 119d as another pair such that reflecting surfaces of the mirrors almost horizontally face each other. The stereo adapter 119 includes the two pairs of mirror systems which are adjacent to each other and symmetrical about an optical axis of the lens 112.

In the imaging unit 110, light from an object located in a field of image pickup view is received by the two right and left pairs of mirror systems of the stereo adapter 119, converged by the lens 112 serving as an image pickup optical system, and picked by the image pickup element 113. At this time, as shown in FIG. 56, the image pickup element 113 picks a right image 116a passing through the mirror system of the right pair of mirrors 119a and 119b and a left image 116b passing through the mirror system of the left pair of mirrors 119c and 119d are picked in image pickup regions which are horizontally shifted from each other and which are not overlapped at all. A technique using the stereo adapter described above is disclosed in, for example, Patent Document 2.

In the imaging unit 110 according to the eleventh embodiment, since a stereo image is picked by one camera having a stereo adapter, an imaging unit can be simplified and made compact in comparison with a configuration in which a stereo image is picked by two cameras, mechanical strength can be increased, and right and left images can be always picked in a relatively stable state. Furthermore, since right and left images are picked by using the common lens and the common image pickup element, a fluctuation caused by individual differences can be suppressed, and trouble of calibration and cumbersome assembly such as alignment can be reduced.

As a configuration of the stereo adapter, in FIG. 55, plane mirrors are combined to each other such that the plane mirrors almost horizontally face each other. However, lens groups may be combined to each other to constitute a stereo adapter, or reflecting mirrors such as a convex mirror and a concave mirror each having a curvature may be combined to each other to constitute a stereo adapter. In place of a reflecting mirror, a reflecting surface may be obtained by a prism.

In embodiment 11, as shown in FIG. 56, the right and left images are picked such that the images are not overlapped at all. However, the right and left images are picked such that the images are partially or entirely overlapped. For example, lights received on the right and the left may be sequentially picked while being switched by a shutter arranged on a right-receiving unit, and right and left images picked with a small time difference may be used as a stereo image in image processing.

Furthermore, in the configuration in the eleventh embodiment, the right and left images are picked while being horizontally shifted from each other. For example, the plane mirrors of the stereo adapter may be almost orthogonally combined to each other, and right and left images may be picked while being vertically shifted.

Other Embodiment

Up to now, the preferable embodiments of the present invention have been described in detail. However, the present invention is not limited by the first to the eleventh embodiments described above. For example, as a stereo camera of an imaging unit, a stereo camera having a larger number of views, for example, a three-view stereo camera or a 4-view stereo camera may be arranged. It is known that a stable processing result having higher reliability is obtained in a three-dimensional reconfiguration process or the like by using the 3-view or 4-view stereo camera (see Tomita Fumiaki, "Advanced Three-Dimensional Vision System VVV", Journal of Information Processing Society of Japan "Information Processing", Vol. 42, No. 4, pp. 370 to 375 (2001) or the like). In particular, it is known that, when a plurality of cameras are arranged to have base lengths in two directions, a three-dimensional reconfiguration can be obtained in a more complex scene. In addition, when a plurality of cameras are arranged in one base length direction, a stereo camera of a so-called multi-base line type can be realized, and a more accurate stereo measurement can be achieved.

Furthermore, as the camera of the imaging unit, in place of a fly-eye stereo camera, a simple-eye camera may be used. In this case, a three-dimensional reconfiguration technique such as a shape from focus method, a shape from defocus method, a shape from motion method, or a shape from shading method is applied to make it possible to calculate a distance to an object in a field of image pickup view.

The shape from focus method is a method which calculates a distance from a focus position when the best focus is obtained. The shape from defocus method is a method which obtains a relative amount of blur is obtained from a plurality of images having different focal distances and obtains a distance on the basis of a correlation between the amount of blur and the distance. The shape promotion method is a method which obtains a distance to an object on the basis of a moving track of a predetermined characteristic point in a plurality of images which continues in terms of time. The shape from shading method is a method which calculates a distance to an object on the basis of the light and shade on an image, a reflecting characteristic of a target object, and light source information.

Furthermore, in the explanation of the configuration of the imaging unit 10 in the first to the tenth embodiments or the configuration of the imaging unit 110 in the eleventh embodiment, one pair of cameras or light-receiving units of the stereo adapter are arranged to be horizontally aligned. However, the cameras or the light-receiving units may be vertically aligned or may be aligned in an oblique direction.

In the first to the eleventh embodiments, the image processing apparatus mount on a vehicle such as a four-wheel vehicle is explained. However, the image processing apparatus can be mounted on another mobile object, for example, an electric wheelchair or the like. The image processing apparatus can be mounted on not only a vehicle but also a mobile object such as a person or a robot. Furthermore, an entire image processing apparatus need not be mounted on a mobile object. For example, an imaging unit and an output unit are mounted on a mobile object, and the other constituent parts are arranged out of the mobile object, so that the imaging units, the output units, and the parts may be connected to each other by wireless communication.

EP 1 881 450 A1

As is apparent from the above explanation, the present invention can include various embodiments and the like which are not described here. Various changes in design and the like can be effected without departing from technical matter specified by the spirit and scope of the invention.

INDUSTRIAL APPLICABILITY

As described above, an image processing apparatus, an image processing method, and an image processing program according to the present invention are useful to recognize a preceding vehicle running ahead of a given vehicle or an object in front of the given vehicle by picking a forward image of the given vehicle, in particular, preferably used for vehicle.

**Claims**

1. An image processing apparatus comprising:

    an imaging unit which is mounted on a mobile object and picks an image of a predetermined field of view to generate an image;
    a moving information detection unit which detects moving information including a speed of the mobile object;
    a processing content setting unit which sets contents of a process to be performed in the image generated by the imaging unit, based on the moving information detected by the moving information detection unit; and
    a processing calculation unit which performs processing calculation according to the contents of the process set by the processing content setting unit.

2. The image processing apparatus according to claim 1, further comprising:

    an arrival point prediction unit which predicts a point at which the mobile object arrives a predetermined period of time after based on the moving information detected by the moving information detection unit, wherein
    the processing content setting unit includes a calculation range setting unit which sets a calculation range in which a distance to an object included in the field of view based on a prediction result by the arrival point prediction unit, and
    the processing calculation unit includes a distance calculation unit which performs distance calculation in the calculation range set by the calculation range setting unit.

3. The image processing apparatus according to claim 2, wherein
    the arrival point prediction unit predicts a point at which the mobile object arrives a predetermined period of time after based on a function experientially obtained.

4. The image processing apparatus according to claim 2, wherein
    the arrival point prediction unit corrects the prediction result based on the moving information.

5. The image processing apparatus according to claim 3, wherein
    the calculation range prediction unit sets the calculation range based on the function experientially obtained.

6. The image processing apparatus according to claim 2, wherein
    the moving information is a speed of the mobile object, an acceleration of the mobile object, a moving direction of the mobile object, a moving orientation of the mobile object, position information of the mobile object, a change rate of the moving information, or a combination thereof.

7. The image processing apparatus according to claim 2, wherein
    the imaging unit generates a first image signal group picked through a first optical path and a second image signal group picked through a second optical path, and
    the distance calculation unit detects an image signal matched with an arbitrary image signal of the first image signal group from the second image signal group, and calculates a distance to the object based on an amount of movement of the detected image signal from the arbitrary image signal.

8. The image processing apparatus according to claim 1, wherein
    the processing content setting unit includes a switching process unit which selects an image processing range to

27

be calculated by the processing calculation unit from a plurality of image processing ranges included in the image, based on the moving information output from the moving information detection unit, and switches to the selected image processing range and

the processing calculation unit includes a distance calculation unit which calculates a distance to an object included in the field of view based on an image signal group corresponding to the image processing range switched by the switching process.unit.

9. The image processing apparatus according to claim 8, wherein
the moving information is at least one of a moving speed of the mobile object, a moving acceleration of the mobile object, a moving direction of the mobile object, a moving orientation of the mobile object, and position information of the mobile object.

10. The image processing apparatus according to claim 8, wherein
the imaging unit generates the first image signal group picked through a first optical path and the second image signal group picked through a second optical path, and
the distance calculation unit detects an image signal matched with an arbitrary image signal of the first image signal group from the second image signal group, and calculates a distance to the object based on an amount of movement of the detected image signal from the arbitrary image signal.

11. The image processing apparatus according to claim 1, further comprising:

a distance calculation unit which calculates a distance from an image pickup position of the imaging unit to an object the image of which is to be picked, wherein
the processing content setting unit includes a processing selection unit which selects an image processing method from a plurality of image processing methods, based on the distance from the image pickup position to the object the image of which is to be picked obtained by the distance calculation unit and a speed of the mobile object obtained by the moving information detection unit, and
the processing calculation unit includes an image processing unit which applies the image processing method selected by the processing selection unit to perform image processing to the image.

12. The image processing apparatus according to claim 11, further comprising:

a zone dividing information storage unit which divides a range of an available speed of the mobile object into a plurality of speed zones to store the plurality of speed zones, and divides a range of a distance at which image pickup can be performed by the imaging unit, into a plurality of distance zones to store the plurality of distance zones, wherein
the processing selection unit reads from the zone dividing information storage unit a speed zone to which a speed of the mobile object detected by the moving information detection unit belongs, reads from the zone dividing information storage unit a distance zone to which a distance to the object the image of which is to be picked calculated by the distance calculation unit belongs, and selects an image processing method based on a combination of the read speed zone and the read distance zone.

13. The image processing apparatus according to claim 12, further comprising:

a closed region setting unit which sets a closed region different for each of the plurality of distance zones; and
an object detection unit which detects a predetermined object for each closed region set by the closed region setting unit.

14. The image processing apparatus according to claim 12, further comprising a selection method changing unit which changes a method for selecting the image processing method in the processing selection unit.

15. The image processing apparatus according to claim 1, wherein
the imaging unit includes
a pair of image pickup optical systems; and
a pair of image pickup elements which convert an optical signal output from the pair of image pickup optical systems into an electric signal.

16. The image processing apparatus according to claim 1, wherein

the imaging unit includes
a pair of waveguide optical system; and
an image pickup element which has image pickup regions corresponding respectively to the waveguide optical systems, and converts an optical signal guided by each waveguide optical system into an electric signal in the corresponding image pickup region.

17. The image processing apparatus according to claim 1, wherein
the mobile object is a vehicle.

18. An image processing method comprising:

an imaging step of being mounted on a mobile object and picking an image of a predetermined field of view to generate an image;
a moving information detection step of detecting moving information including a speed of the mobile object;
a processing content setting step of setting contents of a process to be performed in the image generated by the imaging step, based on the moving information detected by the moving information detection step; and
a processing calculation step of performing processing calculation according to the contents of the process set by the processing content setting step.

19. The image processing method according to claim 18, further comprising:

an arrival point prediction step of predicting a point at which the mobile object arrives a predetermined period of time after based on the moving information detected by the moving information detection step, wherein
the processing content setting step includes setting a calculation range in which a distance to an object included in the field of view based on a prediction result by the arrival point prediction step, and
the processing calculation step includes performing distance calculation in the calculation range set by the processing content setting step.

20. The image processing method according to claim 18, wherein
the processing content setting step includes selecting an image processing range to be calculated by the processing calculation step from a plurality of image processing ranges included in the image, based on the moving information detected by the moving information detection step, and switching to the selected image processing range, and
the processing calculation step includes calculating a distance to an object included in the field of view based on an image signal group corresponding to the image processing range switched by the processing content setting step.

21. The image processing method according to claim 18, further comprising:

a distance calculation step of calculating a distance from an image pickup position in the imaging step to an object the image of which is to be picked, wherein
the processing content setting step includes selecting an image processing method from a plurality of image processing methods, based on the distance from the image pickup position to the object the image of which is to be picked obtained by the distance calculation step and a speed of the mobile object obtained by the moving information detection step, and
the processing calculation step includes applying the image processing method selected by the processing selection step to perform image processing to the image.

22. An image processing program for performing image processing on an image generated by an imaging unit which is mounted on a mobile object and picks an image of a predetermined field of view to generate the image, the image processing program comprising:

a moving information detection step of detecting moving information including a speed of the mobile object;
a processing content setting step of setting contents of a process to be performed in the image generated by the imaging unit, based on the moving information detected by the moving information detection step; and
a processing calculation step of performing processing calculation according to the contents of the process set by the processing content setting step.

23. The image processing program according to claim 22, further comprising:

an arrival point prediction step of predicting a point at which the mobile object arrives a predetermined period of time after based on the moving information detected by the moving information detection step, wherein the processing content setting step includes setting a calculation range in which a distance to an object included in the field of view based on a prediction result by the arrival point prediction step, and the processing calculation step includes performing distance calculation in the calculation range set by the processing content setting step.

24. The image processing program according to claim 22, wherein
the processing content setting step includes selecting an image processing range to be calculated by the processing calculation step from a plurality of image processing ranges included in the image, based on the moving information detected by the moving information detection step, and switching to the selected image processing range, and the processing calculation step includes a distance calculation unit which calculates a distance to an object included in the field of view based on an image signal group corresponding to the image processing range switched by the processing content setting step.

25. The image processing program according to claim 22, further comprising:

a distance calculation step of calculating a distance from an image pickup position in the imaging step to an object the image of which is to be picked, wherein
the processing content setting step includes selecting an image processing method from a plurality of image processing methods, based on the distance from the image pickup position to the object the image of which is to be picked obtained by the distance calculation step and a speed of the mobile object obtained by the moving information detection step, and
the processing calculation step includes applying the image processing method selected by the processing selection step to perform image processing to the image.

# FIG.1

DETECTION UNIT 600

STEERING ANGLE SENSOR 61

SPEED SENSOR 62

60

1 IMAGE PROCESSING APPARATUS

CONTROL UNIT 30

ARRIVAL POINT PREDICTION UNIT 31

CALCULATION RANGE SETTING UNIT 32

320

OUTPUT UNIT 40

STORAGE UNIT

WINDOW INFORMATION 51

IMAGE INFORMATION 52

STEERING ANGLE INFORMATION 53

SPEED INFORMATION 54

ARRIVAL POINT INFORMATION 55

DISTANCE INFORMATION 56

50

IMAGE PICKUP ELEMENT 13a

RIGHT CAMERA 11a

14a  15a

LENS 12a

A/D  FRAME MEMORY

IMAGE ANALYZING UNIT

DISTANCE CALCULATION UNIT 21

210

LENS 12b

A/D  FRAME MEMORY

14b  15b  11b LEFT CAMERA

13b IMAGE PICKUP ELEMENT

10 IMAGING UNIT

20

VEHICLE C

R

f

L

EP 1 881 450 A1

# FIG.2

START

↓

IMAGE PICKUP PROCESS — S101

↓

MOVING INFORMATION
DETECTION PROCESS — S103

↓

ARRIVAL POINT PREDICTION
PROCESS — S105

↓

CALCULATION RANGE
SETTING PROCESS — S107

↓

DISTANCE CALCULATION
PROCESS — S109

↓

DISTANCE INFORMATION
OUTPUT PROCESS — S111

↓

END

# FIG.3

LEFT IMAGE REGION

$y_b$

$z_b$

$I_b$

$A_b$

$x_b$

$y_a$

$A_a$

$z_a$

$\alpha_E$ EPIPOLAR LINE

$x_a$

$I_a$ RIGHT IMAGE REGION

A(x,y,z)

L

11b
LEFT CAMERA

11a
RIGHT CAMERA

y

z

x

# FIG.4

$A_b$   $B_b$

$\alpha_A$

$\alpha_B$

$I_b$ LEFT IMAGE REGION

$I_a$ RIGHT IMAGE REGION

Iab

# FIG.5

$A_b$   $B_b$

$\alpha_E$

$I_b$

$I_a$

Iab

# FIG.6

```
         ARRIVAL POINT
     PREDICTION PROCESS

              │
              ▼
  ACQUIRE MOVING INFORMATION  ⌐ S122

              │
              ▼
   CALCULATE ARRIVAL POINT     ⌐ S124

              │
              ▼
    CONVERT COORDINATES        ⌐ S126

              │
              ▼
   OUTPUT ARRIVAL POINT
       INFORMATION             ⌐ S128

              │
              ▼
          RETURN
```

# FIG.7

PRECEDING VEHICLE
Cb

p1 ARRIVAL POINT

DRIVING ROAD R

θ0

p0 PRESENT POINT

Ca GIVEN VEHICLE

# FIG.8

PRECEDING VEHICLE
Cb

IMAGE 16

DRIVING
ROAD
R

P1
ARRIVAL
POINT

# FIG.9

```
   ┌─────────────────────────┐
   │   CALCULATION RANGE     │
   │    SETTING PROCESS      │
   └─────────────────────────┘
              │
              ▼
   ┌─────────────────────────┐
   │  ACQUIRE ARRIVAL POINT  │─── S142
   │      INFORMATION        │
   └─────────────────────────┘
              │
              ▼          S144
        ╱─────────────╲          NO
       ╱ IS ARRIVAL POINT ╲──────────────────┐
       ╲    CLOSE?    ╱                       │
        ╲───────────╱                        │
          YES │        S146                   │        S150
              ▼                               ▼
   ┌─────────────────────────┐   ┌─────────────────────────┐
   │    SELECT SHORT-        │   │  SELECT LONG-DISTANCE   │
   │   DISTANCE WINDOW       │   │        WINDOW           │
   └─────────────────────────┘   └─────────────────────────┘
              │                               │
              ▼                               ▼
   ┌───────────────────────────────────────────────────┐
   │    OUTPUT CALCULATION RANGE INFORMATION            │─── S148
   └───────────────────────────────────────────────────┘
                          │
                          ▼
                   ┌─────────────┐
                   │   RETURN    │
                   └─────────────┘
```

# FIG.10

PRECEDING VEHICLE Cb

IMAGE 16

P1a ARRIVAL POINT

SHORT-DISTANCE WINDOW 51a

# FIG.11

PRECEDING VEHICLE Cb

IMAGE 16

LONG-DISTANCE WINDOW 51b

P1b ARRIVAL POINT

# FIG.12

PRECEDING VEHICLE
Cb

IMAGE
16

P1c
ARRIVAL POINT

INTERMEDIATE-
DISTANCE WINDOW
51c

# FIG.13

EP 1 881 450 A1

# FIG.14

```
        ┌─────────────────────────────┐
        │  ARRIVAL POINT PREDICTION   │
        │          PROCESS            │
        └─────────────────────────────┘
                       │
                       ▼
        ┌─────────────────────────────┐
        │  ACQUIRE MOVING INFORMATION │ ─── S222
        └─────────────────────────────┘
                       │
                       ▼
        ┌─────────────────────────────┐
        │   CALCULATE CHANGE RATE OF  │ ─── S224
        │       STEERING ANGLE        │
        └─────────────────────────────┘
                       │
                       ▼
        ┌─────────────────────────────┐
        │     SELECT ARRIVAL POINT    │ ─── S226
        │     PREDICTION FUNCTION     │
        └─────────────────────────────┘
                       │
                       ▼
        ┌─────────────────────────────┐
        │   CALCULATE ARRIVAL POINT   │ ─── S228
        └─────────────────────────────┘
                       │
                       ▼
        ┌─────────────────────────────┐
        │     CONVERT COORDINATES     │ ─── S230
        └─────────────────────────────┘
                       │
                       ▼
        ┌─────────────────────────────┐
        │    OUTPUT ARRIVAL POINT     │ ─── S232
        │        INFORMATION          │
        └─────────────────────────────┘
                       │
                       ▼
              ┌─────────────────┐
              │     RETURN      │
              └─────────────────┘
```

# FIG.15

PRECEDING VEHICLE
Cb

•p2 ARRIVAL POINT

DRIVING ROAD
R

q PREDICTION TRACK

θ0

p0 PRESENT POINT

Ca GIVEN VEHICLE

EP 1 881 450 A1

# FIG.16

$\theta 0$

p0 PRESENT POINT

q2
PREDICTION
TRACK

q0
PREDICTION
TRACK

q1
PREDICTION
TRACK

Ca GIVEN VEHICLE

44

# FIG.17

PRECEDING VEHICLE
Cb

IMAGE
16

P1a
ARRIVAL POINT

SHORT-DISTANCE
WINDOW
51d

P2a
ARRIVAL POINT

Qa
PREDICTION TRACK

# FIG.18

PRECEDING VEHICLE
Cb

IMAGE
16

P1b
ARRIVAL POINT

LONG-DISTANCE
WINDOW
51e

Qb
PREDICTION TRACK

P2b
ARRIVAL POINT

# FIG.19

DETECTION UNIT 1600
STEERING ANGLE SENSOR 61
SPEED SENSOR 62
GPS SENSOR 63

3 IMAGE PROCESSING APPARATUS

160

230

CONTROL UNIT
ARRIVAL POINT PREDICTION UNIT 35
CALCULATION RANGE SETTING UNIT 36
360

OUTPUT UNIT 40

STORAGE UNIT
WINDOW INFORMATION 51
IMAGE INFORMATION 52
STEERING ANGLE INFORMATION 53
SPEED INFORMATION 54
ARRIVAL POINT INFORMATION 55
DISTANCE INFORMATION 56
POSITION INFORMATION 58
MAP INFORMATION 59
250

IMAGE PICKUP ELEMENT 13a
14a 15a
RIGHT CAMERA 11a

LENS 12a
A/D
FRAME MEMORY

L

VEHICLE C

LENS 12b
A/D
FRAME MEMORY

R f

13b IMAGE PICKUP ELEMENT
10 IMAGING UNIT

11b LEFT CAMERA

14b 15b

IMAGE ANALYZING UNIT
DISTANCE CALCULATION UNIT 21
210
20

EP 1 881 450 A1

# FIG.20

ASCENDING SLOPE

ARRIVAL POINT
p3b

GIVEN VEHICLE
Ca

PRESENT POINT
p0

$\Delta py$

$\Delta pz$

p3a
ARRIVAL POINT

EP 1 881 450 A1

# FIG.21

EP 1 881 450 A1

# FIG.22

IMAGE PROCESSING APPARATUS 5

CONTROL UNIT 530
WINDOW SWITCHING UNIT 531

DETECTION UNIT 5600 560
SPEED SENSOR 561

5310

OUTPUT UNIT 40

IMAGE PICKUP ELEMENT

IMAGING UNIT 10

RIGHT CAMERA

LENS 12a
13a
14a 15a 11a
A/D FRAME MEMORY

L

IMAGE ANALYSIS UNIT 520 521
DISTANCE CALCULATION UNIT
5210

STORAGE UNIT 550
WINDOW INFORMATION 551
PROBED INFORMATION 552
IMAGE INFORMATION 553
DISTANCE INFORMATION 554

11b LEFT CAMERA
14b 15b
A/D FRAME MEMORY

12b LENS

13b
R
f
IMAGE PICKUP ELEMENT

C VEHICLE

EP 1 881 450 A1

# FIG.23

```
        ┌─────────────┐
        │    START    │
        └──────┬──────┘
               │
        ┌──────▼──────────────┐
        │ SPEED PROBING PROCESS│  ~S501
        └──────┬──────────────┘
               │
        ┌──────▼──────────────┐
        │  WINDOW SWITCHING   │  ~S503
        │     PROCESS         │
        └──────┬──────────────┘
               │
        ┌──────▼──────────────┐
        │ IMAGE PICKUP PROCESS│  ~S505
        └──────┬──────────────┘
               │
        ┌──────▼──────────────┐
        │ DISTANCE CALCULATION│  ~S507
        │     PROCESS         │
        └──────┬──────────────┘
               │
        ┌──────▼──────────────┐
        │  OUTPUT DISTANCE    │  ~S509
        │   INFORMATION       │
        └──────┬──────────────┘
               │
        ┌──────▼──────┐
        │     END     │
        └─────────────┘
```

# FIG.24

```
        ┌─────────────────────┐
        │  WINDOW SWITCHING   │
        │      PROCESS        │
        └─────────────────────┘
                  │
                  ▼
        ┌─────────────────────┐
        │  ACQUIRE PROBING    │──S522
        │    INFORMATION      │
        └─────────────────────┘
                  │
                  ▼   S524
              ╱─────────╲            HIGH SPEED
            ╱  IS VEHICLE  ╲──────────────────────┐
            ╲  SPEED LOW    ╱                      │
              ╲ OR HIGH?  ╱                        │
                ╲───────╱                          │
                  │ LOW SPEED                      │
                  ▼                                ▼
        ┌─────────────────────┐        ┌─────────────────────┐
        │  SELECT LOW-SPEED   │──S526  │  SELECT HIGH-SPEED  │──S530
        │      WINDOW         │        │      WINDOW         │
        └─────────────────────┘        └─────────────────────┘
                  │                                │
                  ▼                                ▼
        ┌─────────────────────┐        ┌─────────────────────┐
        │ DESIGNATE TO SWITCH │──S528  │ DESIGNATE TO SWITCH │──S532
        │ TO LOW-SPEED WINDOW │        │ TO HIGH-SPEED WINDOW│
        └─────────────────────┘        └─────────────────────┘
                  │                                │
                  │◄───────────────────────────────┘
                  ▼
        ┌─────────────────────┐
        │       RETURN        │
        └─────────────────────┘
```

# FIG.25

IMAGE PICKUP RANGE
17

551a
LOW-SPEED WINDOW

# FIG.26

IMAGE PICKUP RANGE
17

551b
HIGH-SPEED WINDOWS

# FIG.27

IMAGE
18a

551a
LOW-SPEED WINDOW

VEHICLE
C1

# FIG.28

IMAGE
18b

VEHICLE
C2

551b
HIGH-SPEED
WINDOWS

# FIG.29

DISTANCE INFORMATION
554a

CALCULATION
RESULT
521a

REGION Esa

REGION Ec1

| 1000 | 1000 | 1000 | 1000 | 1000 | 1000 | 1000 |
|------|------|------|------|------|------|------|
| 1000 | 1000 | 1000 | 1000 | 1000 | 1000 | 1000 |
| 5 | 5 | 5 | 20 | 20 | 20 | 20 |
| 5 | 5 | 5 | 15 | 15 | 15 | 15 |
| 5.5 | 4 | 5.5 | 5 | 5 | 5 | 5 |
| 3 | 3 | 3 | 3 | 3 | 3 | 3 |

# FIG.30

DISTANCE INFORMATION
554b

521b
CALCULATION
RESULT

REGION Esb

REGION Ec2

| 1000 | 1000 | 1000 | 1000 |
|------|------|------|------|
| 100 | 100 | 200 | 200 |
| 100 | 100 | 150 | 150 |

54

# FIG.31

EP 1 881 450 A1

# FIG.32

```
        ┌─────────────┐
        │    START    │
        └─────────────┘
               │
               ▼
   ┌───────────────────────┐
   │ STEERING ANGLE PROBING│ ~S601
   │       PROCESS         │
   └───────────────────────┘
               │
               ▼
   ┌───────────────────────┐
   │   WINDOW SWITCHING    │ ~S603
   │       PROCESS         │
   └───────────────────────┘
               │
               ▼
   ┌───────────────────────┐
   │  IMAGE PICKUP PROCESS │ ~S605
   └───────────────────────┘
               │
               ▼
   ┌───────────────────────┐
   │ DISTANCE CALCULATION  │ ~S607
   │       PROCESS         │
   └───────────────────────┘
               │
               ▼
   ┌───────────────────────┐
   │   OUTPUT DISTANCE     │ ~S609
   │     INFORMATION       │
   └───────────────────────┘
               │
               ▼
        ┌─────────────┐
        │     END     │
        └─────────────┘
```

EP 1 881 450 A1

FIG.33

WINDOW SWITCHING
PROCESS

ACQUIRE PROBING
INFORMATION —S622

S624
IS
DIRECTION OF
MOVEMENT RIGHT, LEFT, OR
STRAIGHTFORWARD?

RIGHT                                    STRAIGHTFORWARD

LEFT

S626                    S630                    S634
SELECT RIGHT WINDOW    SELECT LEFT WINDOW      SELECT
                                              STRAIGHTFORWARD
                                              WINDOW

S628                    S632                    S636
DESIGNATE TO SWITCH    DESIGNATE TO SWITCH    DESIGNATE TO SWITCH TO
TO RIGHT WINDOW        TO LEFT WINDOW         STRAIGHTFORWARD
                                              WINDOW

RETURN

# FIG.34

IMAGE PICKUP
RANGE
17

651a
RIGHT WINDOW

# FIG.35

IMAGE PICKUP
RANGE
17

651b
LEFT WINDOW

# FIG.36

17
IMAGE PICKUP RANGE

651c
STRAIGHTFORWARD
WINDOW

# FIG.37

IMAGE PROCESSING APPARATUS
Z

7700

CONTROL UNIT 730
731
WINDOW SWITCHING UNIT
7310

EXTERNAL COMMUNICATION UNIT 770

OUTPUT UNIT 40

IMAGE PICKUP ELEMENT 13a

IMAGING UNIT 10

LENS 12a

14a  15a
A/D  FRAME MEMORY

11a RIGHT CAMERA

IMAGE PROCESSING UNIT 520

521
DISTANCE CALCULATION UNIT

5210

STORAGE UNIT 750

WINDOW INFORMATION 751
POSITION INFORMATION 752
MAP INFORMATION 753
IMAGE INFORMATION 553
DISTANCE INFORMATION 554

14b  15b
A/D  FRAME MEMORY

11b LEFT CAMERA

12b LENS

L

C
VEHICLE

R

f

13b IMAGE PICKUP ELEMENT

EP 1 881 450 A1

60

# FIG.38

```
        ┌──────────────┐
        │    START     │
        └──────────────┘
               │
               ▼
   ┌──────────────────────┐
   │  RECEIVE POSITION    │ ─── S701
   │    INFORMATION       │
   └──────────────────────┘
               │
               ▼
   ┌──────────────────────┐
   │  WINDOW SWITCHING    │ ─── S703
   │      PROCESS         │
   └──────────────────────┘
               │
               ▼
   ┌──────────────────────┐
   │    IMAGE PICKUP      │ ─── S705
   │      PROCESS         │
   └──────────────────────┘
               │
               ▼
   ┌──────────────────────┐
   │ DISTANCE CALCULATION │ ─── S707
   │      PROCESS         │
   └──────────────────────┘
               │
               ▼
   ┌──────────────────────┐
   │   OUTPUT DISTANCE    │ ─── S709
   │    INFORMATION       │
   └──────────────────────┘
               │
               ▼
        ┌──────────────┐
        │     END      │
        └──────────────┘
```

# FIG.39

```
        ┌─────────────────────┐
        │  WINDOW SWITCHING   │
        │      PROCESS        │
        └─────────────────────┘
                  │
                  ▼
        ┌─────────────────────┐
        │  ACQUIRE POSITION   │──S722
        │    INFORMATION      │
        └─────────────────────┘
                  │
                  ▼
        ┌─────────────────────┐
        │    REFER TO MAP     │──S724
        │    INFORMATION      │
        └─────────────────────┘
                  │
                  ▼  S726
             ╱─────────╲
            ╱ DOES VEHICLE ╲  NO
           ⟨  RUN ON        ⟩──────────────────────┐
            ╲ FREEWAY?     ╱                        │
             ╲───────────╱                          │
                  │ YES                             │
                  ▼                                 ▼
        ┌─────────────────────┐         ┌─────────────────────┐
        │ SELECT FREEWAY      │──S728   │ SELECT STANDARD      │──S732
        │ WINDOW              │         │ WINDOW               │
        └─────────────────────┘         └─────────────────────┘
                  │                                 │
                  ▼                                 ▼
        ┌─────────────────────┐         ┌─────────────────────┐
        │ DESIGNATE TO SWITCH │──S730   │ DESIGNATE TO SWITCH  │──S734
        │ TO FREEWAY WINDOW   │         │ STANDARD WINDOW      │
        └─────────────────────┘         └─────────────────────┘
                  │                                 │
                  ◄─────────────────────────────────┘
                  ▼
        ┌─────────────────────┐
        │       RETURN        │
        └─────────────────────┘
```

# FIG.40

17
IMAGE PICKUP RANGE

751a
FREEWAY WINDOW

# FIG.41

17
IMAGE PICKUP RANGE

751b
STANDARD WINDOW

# FIG.42

```
        ┌─────────────────────────┐
        │   WINDOW SWITCHING      │
        │        PROCESS          │
        └────────────┬────────────┘
                     │
        ┌────────────┴────────────┐
        │   ACQUIRE POSITION      │──S742
        │     INFORMATION         │
        └────────────┬────────────┘
                     │
        ┌────────────┴────────────┐
        │     REFER TO MAP        │──S744
        │      INFORMATION        │
        └────────────┬────────────┘
                     │  S746
                    ╱ IS ROAD ╲
   CONCAVE       ╱  SURFACE CONCAVE  ╲    FLAT SURFACE
   SURFACE  ────╱ SURFACE, CONVEX SURFACE, OR╲────
                ╲    FLAT SURFACE?    ╱
                    ╲              ╱
                     CONVEX
                     SURFACE  S752
    S748                                     S756
┌──────────────────┐  ┌──────────────────┐  ┌──────────────────┐
│ SELECT CONCAVE   │  │ SELECT CONVEX    │  │ SELECT STANDARD  │
│ SURFACE WINDOW   │  │ SURFACE WINDOW   │  │ WINDOW           │
└────────┬─────────┘  └────────┬─────────┘  └────────┬─────────┘
    S750              S754                     S758
┌──────────────────┐  ┌──────────────────┐  ┌──────────────────┐
│ DESIGNATE TO     │  │ DESIGNATE TO     │  │ DESIGNATE TO     │
│ SWITCH TO        │  │ SWITCH TO CONVEX │  │ SWITCH TO        │
│ CONCAVE SURFACE  │  │ SURFACE WINDOW   │  │ STANDARD WINDOW  │
│ WINDOW           │  │                  │  │                  │
└────────┬─────────┘  └────────┬─────────┘  └────────┬─────────┘
         └────────────────┬────┴──────────────────────┘
                ┌─────────┴─────────┐
                │      RETURN        │
                └───────────────────┘
```

# FIG.43

17
IMAGE PICKUP
RANGE

751c
CONCAVE SURFACE
WINDOW

# FIG.44

17
IMAGE PICKUP RANGE

751d
CONVEX SURFACE
WINDOW

# FIG.45

DETECTION UNIT

SPEED SENSOR ~561

STEERING ANGLE SENSOR ~661

830

CONTROL UNIT 831

8310

WINDOW SWITCHING UNIT

EXTERNAL COMMUNICATION UNIT ~770

OUTPUT UNIT ~40

IMAGE PICKUP ELEMENT
13a

IMAGING UNIT 10

LENS
12a

11a RIGHT CAMERA

14a  15a

A/D  FRAME MEMORY

L

12b LENS

14b  15b

A/D  FRAME MEMORY

11b LEFT CAMERA

C
VEHICLE

12b
LENS

13b
IMAGE PICKUP ELEMENT

R

f

20

IMAGE ANALYSIS UNIT 521

DISTANCE CALCULATION UNIT

5210

850

STORAGE UNIT

WINDOW INFORMATION ~851

PROBED INFORMATION ~852

POSITION INFORMATION ~752

MAP INFORMATION ~753

IMAGE INFORMATION ~553

DISTANCE INFORMATION ~554

EP 1 881 450 A1

# FIG.46

9870

980

RADAR

DETECTION UNIT
860
SPEED SENSOR ~561
STEERING ANGLE SENSOR ~661

930

CONTROL UNIT 831
8310
WINDOW SWITCHING UNIT

EXTERNAL COMMUNICATION UNIT ~770

IMAGE PICKUP ELEMENT
IMAGING UNIT
13a
10

OUTPUT UNIT ~40

520

LENS
12a

11a RIGHT CAMERA

14a  15a
A/D  FRAME MEMORY

L

IMAGE ANALYSIS UNIT 521
DISTANCE CALCULATION UNIT
5210

850

STORAGE UNIT

WINDOW INFORMATION ~851
PROBED INFORMATION ~852
POSITION INFORMATION ~752
MAP INFORMATION ~753
IMAGE INFORMATION ~553
DISTANCE INFORMATION ~554

C
VEHICLE

11b LEFT CAMERA
14b  15b
A/D  FRAME MEMORY

12b
LENS

13b
f  IMAGE PICKUP ELEMENT

R

EP 1 881 450 A1

# FIG.47

SPEED DETECTION UNIT — 1160 · · · 1060

101 IMAGE PROCESSING APPARATUS

CONTROL UNIT — 1030

OUTPUT UNIT — 40

PROCESSING SELECTION UNIT — 1031 · · · 1131

STORAGE UNIT — 1050

IMAGE DATA — 1051

DISTANCE INFORMATION — 1052

IMAGE PROCESSING METHOD — 1053

TEMPLATE — 1054

ZONE DIVIDING INFORMATION — 1055

IMAGE ANALYSIS UNIT — 1020

DISTANCE INFORMATION GENERATING UNIT — 1021

IMAGE PROCESSING UNIT — 1022 · · · 1122

IMAGE PICKUP ELEMENT 13a

14a  15a

RIGHT CAMERA 11a

LENS 12a

A/D  FRAME MEMORY

VEHICLE C

LENS 12b

L

A/D  FRAME MEMORY

R          f

14b  15b

11b LEFT CAMERA

13b IMAGE PICKUP ELEMENT

10 IMAGING UNIT

EP 1 881 450 A1

# FIG.48

START

IMAGE PICKUP PROCESS    ⌐S1001

CALCULATE DISTANCE    ⌐S1003

SPEED DETECTION    ⌐S1005

SELECT PROCESS    ⌐S1007

IMAGE PROCESSING    ⌐S1009

END

# FIG.49

301

# FIG.50

71

| SPEED / DISTANCE | LOW SPEED | HIGH SPEED |
|---|---|---|
| SHORT DISTANCE | VEHICLE/ PERSON DETECTION | WHITE LINE DETECTION |
| LONG DISTANCE | WHITE LINE DETECTION | VEHICLE DETECTION |

# FIG.51

"PLEASE APPLY BRAKE"

401

# FIG.52

"YOU WILL BE OUT OF LANE, GO TO THE RIGHT"

402

# FIG.53

| DISTANCE / SPEED | LOW SPEED | INTERMEDIATE SPEED | HIGH SPEED |
|---|---|---|---|
| SHORT DISTANCE | PERSON DETECTION | VEHICLE/ PERSON DETECTION | WHITE LINE DETECTION |
| INTERMEDIATE DISTANCE | VEHICLE/ PERSON DETECTION | WHITE LINE DETECTION | WHITE LINE DETECTION |
| LONG DISTANCE | WHITE LINE DETECTION | WHITE LINE DETECTION | VEHICLE DETECTION |

81

# FIG.54

# FIG.55

PP

STEREO ADAPTER
119

IMAGING UNIT
110

MIRROR
119a

LENS
112

IMAGE PICKUP
ELEMENT
113

CAMERA
111

114

115

A/D

FRAME
MEMORY

MIRROR
119b

119c
MIRROR

119d
MIRROR

# FIG.56

116
IMAGE

LEFT IMAGE
116b

RIGHT IMAGE
116a

<div align="center">

**INTERNATIONAL SEARCH REPORT**

</div>

| | International application No. |
|---|---|
| | PCT/JP2006/309419 |

A.   CLASSIFICATION OF SUBJECT MATTER
*G06T1/00*(2006.01)i, *G01B11/00*(2006.01)i, *G01C3/06*(2006.01)i, *G06T7/20*
(2006.01)i, *G08G1/16*(2006.01)i, *H04N7/18*(2006.01)i

According to International Patent Classification (IPC) or to both national classification and IPC

B.   FIELDS SEARCHED

Minimum documentation searched (classification system followed by classification symbols)
G06T1/00, G01B11/00, G01C3/06, G06T7/20, G08G1/16, H04N7/18

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X<br><br>Y | JP 7-302325 A  (Suzuki Motor Corp.),<br>14 November, 1995 (14.11.95),<br>Par. Nos. [0002], [0029] to [0035], [0041] to<br>[0045]<br>(Family: none) | 1,8,9,17,18,<br>20,22,24<br>2-7,10-16,<br>19,21,23,25 |
| Y | JP 10-283462 A  (Fuji Heavy Industries Ltd.),<br>23 October, 1998 (23.10.98),<br>Par. Nos. [0078] to [0097]<br>(Family: none) | 2-7,10,15,<br>16,19,23 |
| Y | JP 2004-257837 A  (Olympus Corp.),<br>16 September, 2004 (16.09.04),<br>Par. No. [0020]<br>(Family: none) | 10,15,16 |

☒   Further documents are listed in the continuation of Box C.        ☐   See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    25 July, 2006 (25.07.06) | Date of mailing of the international search report<br>    01 August, 2006 (01.08.06) |
|---|---|
| Name and mailing address of the ISA/<br>    Japanese Patent Office | Authorized officer |
| Facsimile No. | Telephone No. |

Form PCT/ISA/210 (second sheet) (April 2005)

EP 1 881 450 A1

**INTERNATIONAL SEARCH REPORT**

International application No.

PCT/JP2006/309419

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 9-264954 A  (Fujitsu Ten Ltd.),<br>07 October, 1997 (07.10.97),<br>Par. Nos. [0014] to [0016]<br>(Family: none) | 11-14,21,25 |
| A | JP 7-182484 A  (Nissan Motor Co., Ltd.),<br>21 July, 1995 (21.07.95),<br>Par. Nos. [0006] to [0014]<br>(Family: none) | 1-25 |
| A | JP 9-272414 A  (Mitsubishi Electric Corp.),<br>21 October, 1997 (21.10.97),<br>Par. Nos. [0025], [0041]<br>(Family: none) | 1-25 |
| A | JP 2003-63340 A  (Aisin Seiki Co., Ltd.),<br>05 March, 2003 (05.03.03),<br>Par. No. [0029]<br>& US 2003/0060972 A1    & EP 001288072 A2 | 1-25 |
| A | JP 2005-98853 A  (Toyota Motor Corp.),<br>14 April, 2005 (14.04.05),<br>Par. Nos. [0045] to [0047]<br>(Family: none) | 1-25 |
| A | JP 11-16099 A  (Hitachi, Ltd.),<br>22 January, 1999 (22.01.99),<br>Par. Nos. [0023] to [0028]<br>(Family: none) | 1-25 |
| A | JP 2002-74598 A  (Hitachi, Ltd.),<br>15 March, 2002 (15.03.02),<br>All pages<br>& US 2002/0026274 A1 | 1-25 |
| A | JP 2000-90243 A  (Yazaki Corp.),<br>31 March, 2000 (31.03.00),<br>All pages<br>& US 006466684 B1 | 1-25 |
| A | JP 2002-83297 A  (Matsushita Electric Industrial Co., Ltd.),<br>22 March, 2002 (22.03.02),<br>All pages<br>& US 2002/0001398 A1    & EP 001179803 A3 | 1-25 |
| A | JP 2002-112252 A  (Toshiba Corp.),<br>12 April, 2002 (12.04.02),<br>All pages<br>& US 2002/0036692 A1 | 1-25 |

Form PCT/ISA/210 (continuation of second sheet) (April 2005)

76

**EP 1 881 450 A1**

**INTERNATIONAL SEARCH REPORT**

| | International application No. |
|---|---|
| | PCT/JP2006/309419 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2000-177513 A (Toyoda Automatic Loom Works, Ltd.), 27 June, 2000 (27.06.00), Par. Nos. [0080] to [0088] (Family: none) | 1-25 |

Form PCT/ISA/210 (continuation of second sheet) (April 2005)

77

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2635246 B

- JP 3290318 B


**Non-patent literature cited in the description**

- **TOMITA FUMIAKI.** Advanced Three-Dimensional Vision System VVV. *Journal of Information Processing Society of Japan ''Information Processing,* 2001, vol. 42 (4), 370-375